# EUROPEAN PATENT APPLICATION

(11) **EP 4 123 619 A1**
(43) Date of publication of application: **25.01.2023**
(21) Application number: 20930353.6
(22) Date of filing: 11.04.2020
(51) Int. Cl.: G08G 1/16

(54) **VEHICLE CONTROL APPARATUS AND METHOD, AND COMPUTER READABLE STORAGE MEDIUM AND PLATOON DRIVING SYSTEM**

(71) Applicant: Huawei Technologies Co., Ltd., Shenzhen, Guangdong 518129, (CN)
(72) Inventor: LI, Tianze, Shenzhen, Guangdong 518129 (CN); ZHENG, Yihong, Shenzhen, Guangdong 518129 (CN)
(74) Representative: Thun, Clemens
(86) International application number: PCT/CN2020/084354
(87) International publication number: WO 2021/203447

(57) **Abstract**

This application provides a vehicle control apparatus, a vehicle control method, a computer-readable storage medium, and a platooning driving system, configured to control a platoon including a plurality of member vehicles. Each member vehicle generates local environment information indicating a driving environment around the member vehicle. A following vehicle reports local environment information of the following vehicle to a pilot vehicle. The pilot vehicle generates global environment information based on local environment information of the pilot vehicle and the received local environment information of the following vehicle, and makes a control decision for the platoon based on the global environment information. The foregoing apparatus and method are applied to a smart vehicle, a connected vehicle, a new energy vehicle, and a V2X vehicle. Determining is performed based on a driving environment around the platoon, so that a more appropriate decision can be made from an overall perspective of the platoon. For example, a case in which a vehicle cannot follow driving can be reduced, or impact caused by a behavior of the platoon on a vehicle outside the platoon can be suppressed. Therefore, driving safety is improved.

## Description

### TECHNICAL FIELD

Embodiments of this application relate to the intelligent connected vehicle field, and in particular, to a vehicle control apparatus, a vehicle control method, a computer-readable storage medium, and a platooning driving system that are used to control a platoon including a plurality of member vehicles.

### BACKGROUND

In platooning driving, a plurality of vehicles driving in a same direction are connected by using a wireless technology, to form a platoon. Usually, a pilot vehicle in the platoon is a manually driving vehicle or an automated driving vehicle, and a rear following vehicle is an automated driving vehicle that interacts based on real-time information and that maintains a stable distance between vehicles at a specific speed. The following vehicle may respond in a shortest time period based on acceleration information, braking information, or the like of a front vehicle, and drive after the front vehicle.

Through platooning driving, a requirement of a transportation enterprise for a driver can be reduced, labor intensity of the driver can be reduced, wind resistance existing during driving of the platoon can be reduced, and fuel consumption of a vehicle can be reduced. In a platooning driving state, a rear vehicle can follow a command from the pilot vehicle instantaneously, to reduce a vehicle accident. In addition, through platooning driving, more lanes may be released, so that another vehicle passes, to significantly improve a traffic jam, improve transportation efficiency, and further alleviate traffic pressure. Platooning driving has great positive significance for improving an economic benefit and a social benefit of the vehicle and reducing environmental pollution caused by emission.

For example, the conventional technology discloses a platooning driving system and method for a platoon. Each vehicle is provided with a positioning part, a communications part, an adjacent lane detection part, and an automated driving control part. The automated driving control part controls, based on a specific condition, the vehicle to drive by automatically following a vehicle that is in front of the vehicle and that is adjacent to the vehicle in the platoon, so that in at least two vehicles, a first vehicle is manually driven, and each following vehicle can automatically drive after a pilot vehicle.

However, in the conventional technology, the pilot vehicle makes a driving decision based on a local driving environment around the pilot vehicle. Consequently, due to some decisions made by the pilot vehicle, some following vehicles cannot continue to drive after a platoon, and driving of a vehicle around the platoon may also be affected. Specifically, a lane change is used as an example for description. During the lane change, a pilot vehicle detects a driving environment around the pilot vehicle by using a sensing unit such as a camera provided for the pilot vehicle or by receiving broadcast information from a surrounding vehicle, and determines that a lane change behavior does not cause a safety problem between the pilot vehicle and the surrounding vehicle, to perform the lane change.Then, a following vehicle driving after the pilot vehicle also changes a lane through following driving (tracking driving). However, when a surrounding vehicle driving in parallel with the following vehicle exists on a lane that is used as a lane change target, the following vehicle cannot execute the lane change behavior, and consequently, cannot drive after the platoon and falls out of the platoon. In addition, being blocked by the pilot vehicle that complets the lane change, the surrounding vehicle driving in parallel with the following vehicle cannot accelerate to overtake the following vehicle that is in parallel with the surrounding vehicle. Therefore, the lane change behavior of the pilot vehicle exerts adverse impact on driving of a vehicle around the platoon.

### SUMMARY

Embodiments of this application are completed in consideration of the foregoing technical problems, and an objective is to provide a vehicle control apparatus, a vehicle control method, a computer-readable storage medium, and a platooning driving system that can be used for controlling platooning driving more properly.

To achieve the foregoing objective, a first aspect of embodiments of this application provides a vehicle control apparatus. The vehicle control apparatus is configured to control a platoon including a plurality of member vehicles, and includes a local environment information obtaining module, a global environment information generation module, and a decision making module. The local environment information obtaining module is configured to obtain local environment information indicating a driving environment of each of the plurality of member vehicles. The global environment information generation module is configured to generate global environment information indicating a driving environment of the platoon. The decision making module is configured to make a control decision about the platoon based on the global environment information.

In embodiments of this application, a vehicle that drives at a foremost location in the plurality of member vehicles is referred to as a pilot vehicle, and a member vehicle driving after the pilot vehicle is referred to as a following vehicle. An object of the control decision may be the pilot vehicle that drives at a foremost location in the member vehicles, or may be the following vehicle driving after the pilot vehicle.

In addition, the "control decision" made by the decision making module not only includes a decision about a motion behavior such as acceleration, braking, or a lane change, but also includes the following processing decision such as sending driving control information or warning information. In addition, a decision about a behavior such as honking a horn may be imagined.

Because the vehicle control apparatus having the foregoing structure makes the decision about the platoon based on the global environment information, the vehicle control apparatus performs determining in consideration of an overall driving environment of the platoon. For example, compared with a case in which the pilot vehicle makes a decision based on only surrounding environment information of the pilot vehicle, in embodiments of this application, a decision that seems to be more proper from an overall perspective of the platoon can be made. For example, a case in which a rear vehicle cannot perform following driving and is separated from the platoon may be reduced, or impact exerted by a behavior of the platoon on another vehicle outside the platoon may be suppressed, to further improve driving safety.

In a possible implementation of the first aspect, the vehicle control apparatus is disposed on a member vehicle i, and the member vehicle i is any one of the plurality of member vehicles; the local environment information obtaining module includes a unit of obtaining local environment information of a current vehicle and a unit of obtaining local environment information of another vehicle; the unit of obtaining local environment information of a current vehicle is configured to obtain local environment information indicating a driving environment of the member vehicle i; and the unit of obtaining local environment information of another vehicle is configured to obtain, from another member vehicle different from the member vehicle i by using a communications unit of the member vehicle i, local environment information indicating a driving environment of the another member vehicle.

By using the foregoing structure, the member vehicle i obtains the local environment information of the another member vehicle, generates the global environment information based on the local environment information of the member vehicle i and the local environment information of the another member vehicle, and makes the control decision based on the global environment information. For example, compared with a case in which the member vehicle i makes a decision based on only the environmental information of the member vehicle i, in embodiments of this application, a decision that seems to be more proper from an overall perspective of the platoon can be made, and driving safety and stability of the platoon can be improved.

In addition, when the vehicle control apparatus is disposed on the pilot vehicle, in other words, the pilot vehicle at a foremost location in the platoon makes the control decision about the platoon, a decision making vehicle coincides with the pilot vehicle, so that the platoon can be immediately guided to execute the decision.

In a possible implementation of the first aspect, the local environment information includes at least location information of a member vehicle and location information of another vehicle located outside the platoon; and the global environment information generation module generates the global environment information by collecting location information in all local environment information obtained by the local environment information obtaining module. In addition, environment information may include vehicle speed information in addition to location information of a vehicle.

By using the foregoing structure, impact of an out-of-platoon vehicle on the behavior of the platoon or impact of a behavior of a member vehicle on an out-of-platoon vehicle may be accurately determined based on the foregoing information, to make a decision that seems to be more proper from an overall perspective of the platoon. A next location or behavior of the vehicle may be predicted based on the speed information, to make a more proper control decision.

In a possible implementation of the first aspect, the decision making module includes a pilot behavior formulation unit, and the pilot behavior formulation unit formulates a motion behavior of the pilot vehicle based on the global environment information. In this case, the vehicle control apparatus may notify the formulated motion behavior of the pilot vehicle to the following vehicle.

By using the foregoing structure, the pilot behavior formulation unit formulates the behavior of the pilot vehicle based on the global environment information, especially information indicating a driving environment of the following vehicle in the global environment information, to suppress occurrence of a case in which the following vehicle cannot perform following driving and is separated from the platoon. In addition, the formulated behavior of the pilot vehicle is notified to the following vehicle, and the following vehicle can drive smoothly after the pilot vehicle in a case of learning of the behavior of the pilot vehicle, to ensure smooth platooning driving.

In a possible implementation, the decision making module includes an independent behavior formulation unit, the independent behavior formulation unit formulates an independent behavior of a following vehicle, and the independent behavior is different from a behavior of driving after the pilot vehicle.

By using the foregoing structure, the driving control information is sent to the following vehicle, so that the following vehicle actively performs the independent behavior different from following driving, to flexibly cope with different road conditions, and improve platooning driving flexibility.

In a specific example of the independent behavior, when the pilot vehicle cannot change a lane, any one of the following independent behaviors is formulated: ① A last following vehicle in the following vehicle changes a lane. ② A following vehicle closest to the pilot vehicle in the following vehicle changes a lane. ③ All following vehicles simultaneously change a lane.

In the manner of ①, for example, when the entire platoon needs to change a lane, but the pilot vehicle cannot change a lane temporarily, the last following vehicle in the following vehicle may change a lane to occupy a lane, so as to prepare for a lane change of the entire platoon. In the manner of ②, the following vehicle closest to the pilot vehicle guides a rear following vehicle to change a lane. Compared with a case in which the pilot vehicle changes a lane after a road condition permits, to guide the platoon to change a lane, in the manner, a case in which the road condition changes in a waiting period and the rear following vehicle cannot change a lane can be avoided. In the manner of ③, all the following vehicles simultaneously change a lane, to shorten a time period required for a lane change of the platoon.

In a possible implementation of the first aspect, when the vehicle control apparatus is disposed on the pilot vehicle, the vehicle control apparatus may include a driving control information generation module, and the driving control information generation module generates, based on the independent behavior formulated by the independent behavior formulation unit, driving control information used to indicate the following vehicle to execute the independent behavior; and the vehicle control apparatus sends the driving control information to the following vehicle by using a communications unit of the pilot vehicle.

In a possible implementation of the first aspect, the decision making module includes a warning scheme formulation unit, the warning scheme formulation unit formulates, in any one of the following manners, a scheme for sending warning information to the another vehicle located outside the platoon, and the warning information is used to provide a situation of the platoon to the another vehicle:
① All of the plurality of member vehicles send the warning information. ② The pilot vehicle that drives at a foremost location in the platoon in the plurality of member vehicles sends the warning information, and a following vehicle whose vehicle sequence number can be exactly divided by N sends the warning information, where a number of the pilot vehicle is 0, a plurality of following vehicles that drive after the pilot vehicle in the platoon are sequentially numbered by using natural numbers, and N ≥ 2. ③ The pilot vehicle sends the warning information, and in a plurality of following vehicles, following vehicles whose distances from the pilot vehicle increase by a specified value send the warning information. ④ The pilot vehicle sends the warning information, each following vehicle generates a random value, a random value range is [0, 1], one threshold is determined, and the random value is compared with the threshold, so that a following vehicle whose random value is greater than the threshold sends the warning information.

In the manner of ①, it can be reliably ensured that the out-of-platoon vehicle receives the warning information, to improve platooning driving safety. In the manners of ② to ④, not only the warning information can be received by as many out-of-platoon vehicles as possible, but also interference between radio signals can be suppressed in comparison with a case in which all the vehicles sends the warning information.

In addition, in a possible implementation of the first aspect, a warning scheme formulation unit selects at least one member vehicle from the plurality of member vehicles based on the global environment information as a sending node that is to send warning information to the another vehicle located outside the platoon, and the warning information is used to provide a situation of the platoon to the another vehicle.

By using the foregoing structure, the warning information is sent to the out-of-platoon vehicle, to notify the situation of the platoon, so as to give a warning to the out-of-platoon vehicle, for example, to remind, not to cut in on the platoon, an out-of-platoon vehicle that wants to cut in line, thereby improving platooning driving safety and smoothness.

In addition, by using the foregoing structure, a member vehicle that is to send the warning information is selected based on the global environment information. Therefore, for example, when it is determined, based on location information of the out-of-platoon vehicle, that the out-of-platoon vehicle may receive information sent by a plurality of member vehicles, not all the member vehicles need to send the warning information, but only some member vehicles need to send the warning information, so that a communication burden of the platoon can be reduced, and a burden imposed on processing of the out-of-platoon vehicle when the out-of-platoon vehicle frequently receives the warning information can be suppressed.

In addition, in a possible implementation of the first aspect, the local environment information includes first communication link status information indicating a status of a direct communication link between a member vehicle and the another vehicle; the global environment information generation module generates the global environment information by collecting first communication link status information in all local environment information obtained by the local environment information obtaining module; and the warning scheme formulation unit selects at least one member vehicle from the plurality of member vehicles as the sending node based on the global environment information.

By using the foregoing structure, because the global environment information includes first communication link status information indicating a status of a communication link between a member vehicle and an out-of-platoon vehicle, a member vehicle that is to send the warning information to the out-of-platoon vehicle is selected based on the first communication link status information. Therefore, the member vehicle that is to send the warning information is selected in consideration of the status of the communication link between a member vehicle and an out-of-platoon vehicle, so that it can be ensured that the out-of-platoon vehicle reliably receives the warning information, and not all the member vehicles need to send the warning information, so as to suppress signal interference, and reduce a communication burden.

In a possible implementation of the first aspect, the warning scheme formulation unit uses, as a first selected sending node, the pilot vehicle that drives at a foremost location in the platoon, and performs selection processing of another node, where during selection processing of the another node, the another node is selected, from the following vehicle driving after the pilot vehicle in the platoon, based on a condition that the another node can perform direct inter-vehicle communication with a previously selected sending node and that the warning information sent by the another node can cover all other vehicles between the another node and the previously selected sending node.

Based on a case (of whether all out-of-platoon vehicles are covered), one or more other sending nodes may be selected.

By using the foregoing structure, a proper sending node can be quickly and effectively selected, to ensure that sent warning information is received by the out-of-platoon vehicle.

In addition, during selection processing of the another node, a following vehicle that is far from the previously selected sending node may be preferentially selected.

By using the foregoing structure, the warning scheme formulation unit starts determining from the following vehicle that is far from the pilot vehicle, in other words, starts determining from a following vehicle with a high probability that more out-of-platoon vehicles are covered, so that a calculation burden can be reduced, and the sending node of the warning information is quickly selected.

In addition, in a possible implementation of the first aspect, the local environment information obtained by the local environment information obtaining module includes second communication link status information indicating a status of a direct communication link between a member vehicle and another member vehicle; the global environment information generation module generates the global environment information by collecting second communication link status information in all local environment information obtained by the local environment information obtaining module; and the decision making module includes a communication path planning unit, the communication path planning unit plans an inter-vehicle communication path based on the second communication link status information in the global environment information, and the inter-vehicle communication path is used by the plurality of member vehicles to perform inter-vehicle communication.

By using the foregoing structure, the global environment information includes second communication link status information indicating a status of a direct communication link between the plurality of member vehicles, and an inter-vehicle communication path between the member vehicles is planned based on the second communication link status information, to ensure that the member vehicles reliably communicate, and improve platoon control reliability and stability.

In a possible implementation of the first aspect, the communication path planning unit determines, based on the second communication link status information in the global environment information, whether any two of the plurality of member vehicles can perform direct inter-vehicle communication; and when determining that two member vehicles cannot perform direct inter-vehicle communication, the communication path planning unit performs relay node selection processing of selecting a relay node from a member vehicle located between the two member vehicles, to plan an inter-vehicle communication path.

By using the foregoing structure, when direct communication cannot be performed or direct communication is not reliable, the relay node is selected to perform relaying, so that information is reliably transmitted, and platooning driving reliability and stability are improved.

In addition, in a possible implementation of the first aspect, during relay node selection processing, the communication path planning unit preferentially selects, as the relay node, a member vehicle located in the middle of the two member vehicles.

By using the foregoing structure, a following vehicle located in the middle of the pilot vehicle and a target vehicle is preferentially selected, in other words, a node with a high probability of serving as the relay node is preferentially selected, so that a proper following vehicle (the relay node) can be quickly selected.

In a possible implementation of the first aspect, when two following vehicles are located in the middle of the two member vehicles, a following vehicle closer to the pilot vehicle may be preferentially selected as the relay node.

By using the foregoing structure, the following vehicle closer to the pilot vehicle can be preferentially used as the relay node, so that the relay node more reliably receives, for example, the driving control information from the pilot vehicle, to implement reliable relay sending.

In addition, in a possible implementation of the first aspect, when the vehicle control apparatus is disposed on the pilot vehicle, the decision making module may include the independent behavior formulation unit; the independent behavior formulation unit formulates, based on the global environment information, the independent behavior of the following vehicle driving after the pilot vehicle in the platoon, and the independent behavior is different from the behavior of driving after the pilot vehicle; the vehicle control apparatus includes the driving control information generation unit, and the driving control information generation unit generates, based on the independent behavior formulated by the independent behavior formulation unit, the driving control information used to indicate the following vehicle to execute the independent behavior; and the communication path planning unit plans, based on the second path link status information in the global environment information, an inter-vehicle communication path to be used by the pilot vehicle to send the driving control information to the following vehicle.

By using the foregoing structure, the driving control information can be reliably sent to the following vehicle, to improve platoon control reliability.

In addition, to achieve the foregoing object, a second aspect of embodiments of this application relates to a vehicle control method. The vehicle control method is used to control a platoon including a plurality of member vehicles. The vehicle control method includes a local environment information obtaining step, a global environment information generation step, and a decision making step. The local environment information obtaining step is obtaining local environment information indicating a driving environment of each of the plurality of member vehicles; the global environment information generation step is generating global environment information indicating a driving environment of the platoon based on the local environment information; and the decision making step is making a control decision about the platoon based on the global environment information.

In the vehicle control method, a decision about the member vehicle is made based on the global environment information. Therefore, determining is performed in consideration of the driving environment of the platoon, to make a decision that seems to be more proper from an overall perspective of the platoon. For example, a case in which a rear vehicle cannot perform following driving and is separated from the platoon may be reduced, or impact exerted by a behavior of the platoon on an out-of-platoon vehicle may be suppressed, to further improve driving safety.

In a possible implementation of the second aspect, the vehicle control method is performed by a vehicle control apparatus disposed on a member vehicle i, the member vehicle i is any one of the plurality of member vehicles, and the local environment information obtaining step includes a step of obtaining local environment information of a current vehicle and a step of obtaining local environment information of another vehicle; and

The step of obtaining local environment information of a current vehicle is obtaining local environment information indicating a driving environment of the member vehicle i; and the step of obtaining local environment information of another vehicle is obtaining the local environment information of the other vehicle, the local environment information indicating the driving environment of the other member vehicle is obtaining, from another member vehicle different from the member vehicle i by using a communications unit of the member vehicle i, local environment information indicating a driving environment of the another member vehicle.

The member vehicle i may be a pilot vehicle that drives at a foremost location in the platoon.

In a possible implementation of the second aspect, the local environment information includes at least location information of a member vehicle and location information of another vehicle located outside the platoon; and the global environment information generation step is generating the global environment information by collecting location information in all local environment information obtained in the local environment information obtaining step.

In the vehicle control method, in a possible implementation of the second aspect, the decision making step includes a pilot behavior formulation step, and the pilot behavior formulation step is formulating, based on the global environment information, a motion behavior of the pilot vehicle that drives at a foremost location in the platoon.

In a possible implementation of the second aspect, the decision making step includes an independent behavior formulation step, the independent behavior formulation step is formulating an independent behavior of a following vehicle, and the independent behavior is different from a behavior of driving after the pilot vehicle.

In a possible implementation of the second aspect, in the independent behavior determining step, when the pilot vehicle cannot change a lane, any one of the following independent behaviors is formulated:
① A last following vehicle in the following vehicle changes a lane. ② A following vehicle closest to the pilot vehicle in the following vehicle changes a lane. ③ All following vehicles simultaneously change a lane.

In a possible implementation of the second aspect, the vehicle control method is performed by a vehicle control apparatus disposed on the pilot vehicle, and includes a driving control information generation step, and the driving control information generation step is generating, based on the independent behavior formulated in the independent behavior formulation step, driving control information used to indicate the following vehicle to execute the independent behavior; and the vehicle control method further includes a step of sending the driving control information to the following vehicle by using a communications unit of the pilot vehicle.

In a possible implementation of the second aspect, the decision making step includes a warning scheme formulation step, the warning scheme formulation step is formulating, in any one of the following manners, a scheme for sending warning information to the another vehicle located outside the platoon, and the warning information is used to provide a situation of the platoon to the another vehicle: ① All the member vehicles send the warning information. ② The pilot vehicle sends the warning information, and a following vehicle whose vehicle sequence number can be exactly divided by N sends the warning information, where a number of the pilot vehicle is 0, following vehicles after the pilot vehicle are sequentially numbered by using natural numbers, and N ≥ 2. ③ The pilot vehicle sends the warning information, and in a plurality of following vehicles, following vehicles whose distances from the pilot vehicle increase by a specified value send the warning information. ④ The pilot vehicle sends the warning information, each following vehicle in the platoon generates a random value, a random value range is [0, 1], one threshold is determined, and the random value is compared with the threshold, so that a following vehicle whose random value is greater than the threshold sends the warning information.

In a possible implementation of the second aspect, the decision making step includes the warning scheme formulation step, the warning scheme formulation step is selecting at least one member vehicle from the plurality of member vehicles based on the global environment information as a sending node that is to send the warning information to the another vehicle located outside the platoon, and the warning information is used to provide the situation of the platoon to the another vehicle.

In a possible implementation of the second aspect, the local environment information includes first communication link status information indicating a status of a direct communication link between a member vehicle and the another vehicle; the global environment information generation step is generating the global environment information by collecting first communication link status information in all local environment information obtained in the local environment information obtaining step; and the warning scheme formulation step is selecting at least one member vehicle from the plurality of member vehicles as the sending node based on the global environment information.

In a possible implementation of the second aspect, the warning scheme formulation step is using, as a first selected sending node, the pilot vehicle that drives at a foremost location in the platoon, and performing selection processing of another node, where during selection processing of the another node, the another node is selected, from the following vehicle driving after the pilot vehicle in the platoon, based on a condition that the another node can perform direct inter-vehicle communication with a previously selected sending node and that the warning information sent by the another node can cover all other vehicles between the another node and the previously selected sending node.

In a possible implementation of the second aspect, during selection processing of the another node, a following vehicle that is far from the previously selected sending node may be preferentially selected.

In a possible implementation of the second aspect, the local environment information obtained in the local environment information obtaining step includes second communication link status information indicating a status of a direct communication link between a member vehicle and another member vehicle; the global environment information generation step is generating the global environment information by collecting second communication link status information in all local environment information obtained in the local environment information obtaining step; and the decision making step includes a communication path planning step, the communication path planning step is planning an inter-vehicle communication path based on the second communication link status information in the global environment information, and the inter-vehicle communication path is used by the plurality of member vehicles to perform inter-vehicle communication.

In a possible implementation of the second aspect, the communication path planning step is determining, based on the second communication link status information in the global environment information, whether any two of the plurality of member vehicles can perform direct inter-vehicle communication; and when determining that two member vehicles cannot perform direct inter-vehicle communication, performing relay node selection processing of selecting a relay node from a member vehicle located between the two member vehicles, to plan an inter-vehicle communication path.

In a possible implementation of the second aspect, during relay node selection processing, a member vehicle located in the middle of the two member vehicles is preferentially selected as the relay node.

In a possible implementation of the second aspect, when two following vehicles are located in the middle of the two member vehicles, a following vehicle closer to the pilot vehicle is preferentially selected as the relay node.

In a possible implementation of the second aspect, when the vehicle control method is performed by the vehicle control apparatus disposed on the pilot vehicle, the decision making step includes the independent behavior formulation step, the independent behavior formulation step is formulating, based on the global environment information, the independent behavior of the following vehicle driving after the pilot vehicle in the platoon, and the independent behavior is different from the behavior of driving after the pilot vehicle; the vehicle control method includes the driving control information generation step, and the driving control information generation step is generating, based on the independent behavior formulated in the independent behavior formulation step, the driving control information used to indicate the following vehicle to execute the independent behavior; and the communication path planning step is planning, based on the second path link status information in the global environment information, an inter-vehicle communication path to be used by the pilot vehicle to send the driving control information to the following vehicle.

In addition, to achieve the foregoing objective, a third aspect of embodiments of this application provides a computer-readable storage medium, and the computer-readable storage medium stores a program that is used to enable a computer to perform any one of the vehicle control methods.

In addition, to achieve the foregoing objective, a fourth aspect of embodiments of this application provides a computing device, including a processor and a memory, the memory stores a program, and the program is run by using the processor, so that any one of the vehicle control methods is performed.

In addition, to achieve the foregoing object, a fifth aspect of embodiments of this application relates to a vehicle, and the vehicle includes a vehicle control apparatus having any one of the foregoing structures.

In addition, to achieve the foregoing object, a sixth aspect of embodiments of this application relates to a platooning driving system. The platooning driving system includes a platoon including a plurality of member vehicles, the platooning driving system includes a main control apparatus, and the main control apparatus includes a local environment information obtaining module, a global environment information generation module, and a decision making module. The local environment information obtaining module is configured to obtain local environment information indicating a driving environment of each of the plurality of member vehicles. The global environment information generation module is configured to generate global environment information indicating a driving environment of the platoon. The decision making module is configured to make a control decision about the platoon based on the global environment information.

An object about which the control decision is made may be the pilot vehicle that drives at a foremost location in the member vehicles, or may be the following vehicle driving after the pilot vehicle. ] In addition, the "control decision" made by the decision making module not only includes a decision about a motion behavior such as acceleration, braking, or a lane change, but also includes the following processing decision such as sending driving control information or warning information. In addition, a decision about a behavior such as honking a horn may be imagined.

The platooning driving system having the foregoing structure makes a decision about the member vehicle based on the global environment information. Therefore, the platooning driving system performs determining in consideration of a driving environment of the platoon, to make a decision that seems to be more proper from an overall perspective of the platoon. For example, a case in which a rear vehicle cannot perform following driving and is separated from the platoon may be reduced, or impact exerted by a behavior of the platoon on an out-of-platoon vehicle may be suppressed, to further improve driving safety.

In a possible implementation of the sixth aspect, the plurality of member vehicles include a main control vehicle provided with the main control apparatus and another member vehicle; the main control apparatus generates first local environment information indicating a driving environment of the main control vehicle; a vehicle control apparatus of the another member vehicle generates second local environment information indicating a driving environment of the another member vehicle, and sends the generated second local environment information to the main control apparatus; and the global environment information generation module of the main control apparatus generates the global environment information based on the first local environment information and the second local environment information.

In a possible implementation of the sixth aspect, the main control vehicle is a pilot vehicle that drives at a foremost location in the platoon, and the another member vehicle is a following vehicle driving after the pilot vehicle.

In a possible implementation of the sixth aspect, the local environment information includes at least location information of a member vehicle and location information of another vehicle located outside the platoon; and the global environment information generation module generates the global environment information by collecting location information in all local environment information obtained by the local environment information obtaining module.

In a possible implementation of the sixth aspect, the decision making module includes a pilot behavior formulation unit, and the pilot behavior formulation unit formulates, based on the global environment information, a motion behavior of the pilot vehicle that drives at a foremost location in the platoon.

In a possible implementation of the sixth aspect, the plurality of member vehicles include the pilot vehicle that drives at a foremost location in the platoon and the following vehicle driving after the pilot vehicle in the platoon; and the decision making module includes an independent behavior formulation unit, the independent behavior formulation unit formulates an independent behavior of the following vehicle based on the global environment information, and the independent behavior is different from the behavior of driving after the following vehicle.

In a possible implementation of the sixth aspect, when the piloting vehicle cannot change a lane, the independent behavior formulation unit formulates any one of the following independent behaviors: ① A last following vehicle in the following vehicle changes a lane. ② A following vehicle closest to the pilot vehicle in the following vehicle changes a lane. ③ All following vehicles simultaneously change a lane.

In a possible implementation of the sixth aspect, the main control apparatus is disposed on the pilot vehicle, and includes a driving control information generation module, and the driving control information generation module generates, based on the independent behavior formulated by the independent behavior formulation unit, driving control information used to indicate the following vehicle to execute the independent behavior; and the main control apparatus sends the driving control information to the following vehicle by using a communications unit of the pilot vehicle.

In a possible implementation of the sixth aspect, the decision making module includes a warning scheme formulation unit, the warning scheme formulation unit formulates, in any one of the following manners, a scheme for sending warning information to the another vehicle located outside the platoon, and the warning information is used to provide a situation of the platoon to the another vehicle: ① All of the plurality of member vehicles send the warning information. ② The pilot vehicle that drives at a foremost location in the platoon in the plurality of member vehicles sends the warning information, and a following vehicle whose vehicle sequence number can be exactly divided by N sends the warning information, where a number of the pilot vehicle is 0, a plurality of following vehicles that drive after the pilot vehicle in the platoon are sequentially numbered by using natural numbers, and N ≥ 2. ③ The pilot vehicle sends the warning information, and in a plurality of following vehicles, following vehicles whose distances from the pilot vehicle increase by a specified value send the warning information. ④ The pilot vehicle sends the warning information, each following vehicle generates a random value, a random value range is [0, 1], one threshold is determined, and the random value is compared with the threshold, so that a following vehicle whose random value is greater than the threshold sends the warning information.

In a possible implementation of the sixth aspect, the decision making module includes a warning scheme formulation unit, the warning scheme formulation unit selects at least one member vehicle from the plurality of member vehicles based on the global environment information as a sending node that is to send warning information to the another vehicle located outside the platoon, and the warning information is used to provide a situation of the platoon to the another vehicle.

In a possible implementation of the sixth aspect, the local environment information includes first communication link status information indicating a status of a direct communication link between a member vehicle and the another vehicle; the global environment information generation module generates the global environment information by collecting first communication link status information in all local environment information obtained by the local environment information obtaining module; and the warning scheme formulation unit selects at least one member vehicle from the plurality of member vehicles as the sending node based on the global environment information.

In a possible implementation of the sixth aspect, the warning scheme formulation unit uses, as a first selected sending node, the pilot vehicle that drives at a foremost location in the platoon, and performs selection processing of another node, where during selection processing of the another node, the another node is selected, from the following vehicle driving after the pilot vehicle in the platoon, based on a condition that the another node can perform direct inter-vehicle communication with a previously selected sending node and that the warning information sent by the another node can cover all other vehicles between the another node and the previously selected sending node.

In a possible implementation of the sixth aspect, during selection processing of the another node, a following vehicle that is far from the previously selected sending node is preferentially selected.

In a possible implementation of the sixth aspect, the local environment information obtained by the local environment information obtaining module includes second communication link status information indicating a status of a direct communication link between a member vehicle and another member vehicle; the global environment information generation module generates the global environment information by collecting second communication link status information in all local environment information obtained by the local environment information obtaining module; and the decision making module includes a communication path planning unit, the communication path planning unit plans an inter-vehicle communication path based on the second communication link status information in the global environment information, and the inter-vehicle communication path is used by the plurality of member vehicles to perform inter-vehicle communication.

In a possible implementation of the sixth aspect, the communication path planning unit determines, based on the second communication link status information in the global environment information, whether any two of the plurality of member vehicles can perform direct inter-vehicle communication; and when determining that two member vehicles cannot perform direct inter-vehicle communication, the communication path planning unit performs relay node selection processing of selecting a relay node from a member vehicle located between the two member vehicles, to plan an inter-vehicle communication path.

In a possible implementation of the sixth aspect, during relay node selection processing, the communication path planning unit preferentially selects, as the relay node, a member vehicle located in the middle of the two member vehicles.

In a possible implementation of the sixth aspect, the plurality of member vehicles include the pilot vehicle that drives at a foremost location in the platoon and the following vehicle driving after the pilot vehicle in the platoon; and when two following vehicles are located in the middle of the two member vehicles, a following vehicle closer to the pilot vehicle is preferentially selected as the relay node.

In a possible implementation of the sixth aspect, the main control apparatus is disposed on the pilot vehicle that drives at a foremost location in the platoon; the decision making module includes the independent behavior formulation unit, the independent behavior formulation unit formulates, based on the global environment information, the independent behavior of the following vehicle driving after the pilot vehicle in the platoon, and the independent behavior is different from the behavior of driving after the pilot vehicle; the main control apparatus includes the driving control information generation unit, and the driving control information generation unit generates, based on the independent behavior formulated by the independent behavior formulation unit, the driving control information used to indicate the following vehicle to execute the independent behavior; and the communication path planning unit plans, based on the second path link status information in the global environment information, an inter-vehicle communication path to be used by the pilot vehicle to send the driving control information to the following vehicle.

In embodiments of this application, the decision about the member vehicle is made based on the global environment information. Therefore, determining is performed in consideration of the driving environment of the platoon, to make a decision that seems to be more proper from an overall perspective of the platoon. For example, a case in which a rear vehicle cannot perform following driving and is separated from the platoon may be reduced, or impact exerted by a behavior of the platoon on an out-of-platoon vehicle may be suppressed, to further improve driving safety.

### BRIEF DESCRIPTION OF DRAWINGS

FIG. 1 is a schematic diagram of a platooning driving system according to an embodiment of this application;
FIG. 2 is a block diagram of a structure of each member vehicle according to an embodiment of this application;
FIG. 3 is a block diagram of a structure of a vehicle control apparatus according to an embodiment of this application;
FIG. 4 is a schematic diagram of a driving scenario of a platooning driving system according to an embodiment of this application;
FIG. 5 is a schematic diagram of content of local topology information according to an embodiment of this application;
FIG. 6 is a schematic diagram of content of global topology information according to an embodiment of this application;
FIG. 7 is a schematic diagram of a topology of global topology information according to an embodiment of this application;
FIG. 8A and FIG. 8B are a flowchart of processing performed in a platooning driving system according to an embodiment of this application;
FIG. 9 is a block diagram of a structure of another vehicle control apparatus according to an embodiment of this application;
FIG. 10 is a schematic diagram of content of driving control information according to an embodiment of this application;
FIG. 11 is a schematic diagram of content of warning information according to an embodiment of this application;
FIG. 12 is a schematic diagram of transfer mechanisms of various information according to an embodiment of this application;
FIG. 13A and FIG. 13B are a flowchart of other processing performed in a platooning driving system according to an embodiment of this application;
FIG. 14 is a schematic diagram of an application scenario according to an embodiment of this application;
FIG. 15 is a block diagram of a structure of still another vehicle control apparatus according to an embodiment of this application;
FIG. 16A, FIG. 16B, and FIG. 16C are a flowchart of still other processing performed in a platooning driving system according to an embodiment of this application;
FIG. 17 is a flowchart of performing control processing on a following vehicle according to an embodiment of this application;
FIG. 18A and FIG. 18B are a flowchart of warning processing according to an embodiment of this application; and
FIG. 19 is a schematic diagram of a platoon driving scenario used to illustrate a specific example of performing control processing and warning processing on a following vehicle according to an embodiment of this application.

### DESCRIPTION OF EMBODIMENTS

Used technical terms are first described before specific implementations are described.

Advanced driver assistant system (Advanced Driver Assistant System):
The advanced driver assistant system, ADAS for short, is an active safety technology in which various sensors installed on a vehicle are used to immediately collect environmental data of an inside and an outside of the vehicle, and perform technical processing such as identification, detection, and tracking on a static object and a dynamic object, so that a driver can be aware of a possible risk as quickly as possible, to attract attention and improve safety. A sensor used in the ADAS is mainly a camera, radar, a laser, an ultrasonic wave, or the like, may be used to detect light, heat, pressure, or another variable used to monitor a vehicle status, and is usually located on a front/rear bumper of the vehicle, on a side-view mirror, inside a cab, or on a windshield. The ADAS usually includes an adaptive cruise control ACC (Adaptive cruise control) system, a lane departure warning system LDWS (Lane departure warning system), a lane keeping assist LKA (Lane keep assistance) system, a collision avoidance system or a pre-crash system CAS (Collision avoidance system or Pre crash system), a night vision system NV (Night Vision system), an adaptive light control ALC (Adaptive light control) system, a pedestrian protection system PPS (Pedestrian protection system), an automatic parking AP (Automatic parking) system, a traffic-sign recognition TSR (Traffic sign recognition) system, a blind spot detection BSD (Blind spot detection) system, a driver drowsiness detection DDD (Driver drowsiness detection) system, a hill descent control HDC (Hill descent control) system, an electric vehicle warning sound EVWS (Electric vehicle warning sounds) system, or the like.

V2X (Vehicle to Everything):
As a vehicle wireless communication technology, the V2X is a next-generation information and communications technology that is used to connect a vehicle and everything. Herein, V represents a vehicle (Vehicle), X represents any object that exchanges information with the vehicle, and currently, X mainly includes a vehicle, a person, a traffic roadside infrastructure, or a network.

C-V2X (Cellular (Cellular) V2X):
The C-V2X is a vehicle wireless communication technology developed based on a communications technology of a 3GPP global standard and based on a cellular network communications technology such as 4G/5G, and includes LTE-V2X (LTE-V for short) and 5G-V2X, including a PC5 interface and a Uu interface.

PC5 interface:
The PC5 interface is a short range direct communication interface between an OBU (On Board Unit, on-board unit) and an RSU (Road Side Unit, roadside unit) or between OBUs, supports to exchange rapidly changing dynamic information (for example, a location, a speed, a driving direction, or a traffic condition) based on V2X broadcast information, and supports future more advanced automated driving applications including vehicle platooning driving and sensor sharing.

Uu interface:
The Uu interface is a communications interface between an RSU and a base station or between an OBU and a base station, may be used to implement long-distance and wider-range high-speed data communication, and supports to download a high-definition map and obtain various entertainment services from the cloud.

Preferred implementations of this application are described in detail below with reference to the accompanying drawings.

### 1. Implementation 1: Platooning driving system

Implementation 1 of this application relates to a platooning driving system. The platooning driving system is a system in which at least two vehicles driving in a same direction communicate by using a V2X wireless communication technology represented by C-V2X (Cellular Vehicle to Everything), to form a platoon for driving. Optionally, the platooning driving system may further include a server, a drone, or the like that communicates with an in-platoon vehicle.

In this specification, a vehicle that is a member of the platoon is referred to as a member vehicle, and a vehicle outside the platoon is referred to as an out-of-platoon vehicle. In addition, a member vehicle at a foremost location in the platoon is referred to as a pilot vehicle, and a member vehicle that performs following driving after the pilot vehicle is referred to as a following vehicle. In addition, in the following descriptions, front, back, left, and right directions are directions whose reference is a platoon advancing direction.

### 1.1. Embodiment 1

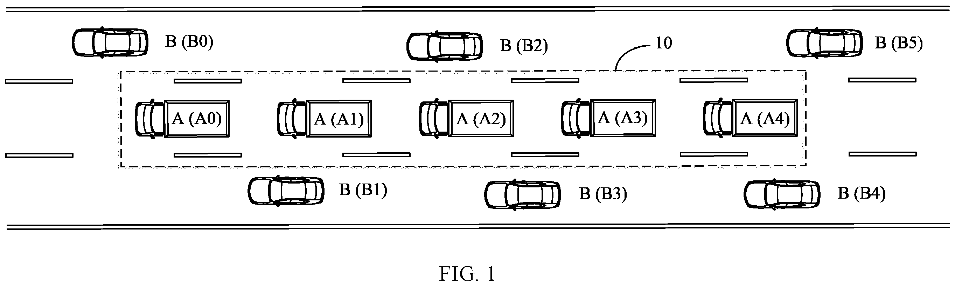

Embodiment 1 of the platooning driving system is described below with reference to FIG. 1 to FIG. 8B.

### 1.1.1. Structure

FIG. 1 is an overall schematic diagram of a platooning driving system 10 according to Embodiment 1. As shown in FIG. 1, the platooning driving system 10 includes, for example, five member vehicles A that drive in a same direction and that form a platoon, and the member vehicles A maintain a specific inter-vehicle distance and drive at a specific speed. Each member vehicle A is provided with an ADAS system and a V2X communications interface. The member vehicle A is, for example, a transportation vehicle of a logistics company, but is not limited thereto, or may be a passenger vehicle. In addition, FIG. 1 is merely an example. A quantity of member vehicles A in the platoon is not limited thereto, and it only needs to be ensured that at least two vehicles form a platoon.

Each member vehicle A in the platoon has an identity (id) that may be used to identify an identity of a member of the platoon of the member vehicle A, and further has a number corresponding to a location of the member vehicle A in the platoon, or the like. In FIG. 1, the five member vehicles A are respectively a pilot vehicle A0 and following vehicles A1, A2, A3, and A4 (A1 to A4). The pilot vehicle A0 is an automated driving vehicle that may autonomously formulate a driving behavior, and the following vehicles A1 to A4 are automated driving vehicles that perform interaction based on real-time information.

In addition, as shown in FIG. 1, for example, on an adjacent lane of a lane on which the platoon drives, a plurality of out-of-platoon vehicles B0 to B5 drive around the platoon (the out-of-platoon vehicle is sometimes collectively referred to as an out-of-platoon vehicle B below). In the platooning driving system 10 in this implementation, each member vehicle A generates, in real time, local environment information indicating driving environment around the member vehicle A, and the following vehicles A1 to A4 periodically report, to the pilot vehicle A0 that serves as a main control vehicle, local environment information generated by the following vehicles A1 to A4. The pilot vehicle A0 collects local environment information of all the member vehicles A in the platoon including the pilot vehicle A0, and generates global environment information indicating a driving environment around the platoon.

In addition, the pilot vehicle A0 formulates a driving behavior such as acceleration, braking, a lane change, a turn, or current situation maintainance of the platoon based on global topology information. Usually, to control the driving behavior of the platoon, the pilot vehicle A0 formulates and executes a driving behavior of the pilot vehicle A0, and each of the following vehicles A1 to A4 after the pilot vehicle A0 recognize a driving behavior of a member vehicle A located in front of each of the following vehicles A1 to A4, and perform following driving. Such "following driving", for example, may be performed in a manner in the conventional technology. Details are not described herein again.

In addition, in addition to the foregoing general case, in an example of a specific case, if the following vehicles A1 to A4 consider, through determining, that driving safety is affected if the following vehicles A1 to A4 drive after a front vehicle, the following vehicles A1 to A4 may not perform following driving, for example, withdraw from the platoon.

Constitution of the platooning driving system 10 in this implementation is described in detail below.

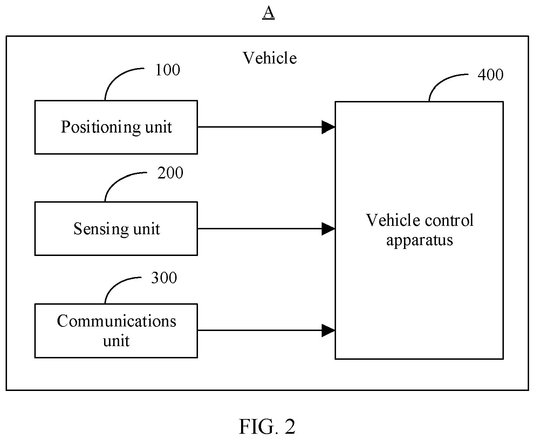

FIG. 2 is a block diagram of a structure of each member vehicle A according to Embodiment 1 of this application. As shown in FIG. 2, each member vehicle A includes a positioning unit 100, a sensing unit 200, a communications unit 300, and a vehicle control apparatus 400.

The positioning unit 100 includes, for example, a global navigation satellite system (GNSS) receiver, configured to: receive a satellite signal, and send the received satellite signal to the vehicle control apparatus 400. The vehicle control apparatus 400 can obtain location information of a current vehicle (a vehicle to which the vehicle control apparatus 400 belongs) based on this. The GNSS receiver may be a global positioning system (GPS) receiver, a Beidou system receiver, or another satellite positioning system receiver.

The sensing unit 200 includes, for example, various sensors such as a camera, millimeter wave radar, laser radar, or ultrasonic radar, can detect a driving environment of the current vehicle, to obtain detection data, and can send the detection data to the vehicle control apparatus 400. The vehicle control apparatus 400 generates driving environment information (local environment information) of the current vehicle based on the detection data.

In this implementation, the communications unit 300 includes a vehicle terminal device (Vehicle-TBOX), can perform short range direct communication through, for example, a PC5 interface, and can perform long-distance and wider-range high-speed data communication through, for example, a Uu interface. Therefore, the communications unit 300 receives broadcast information from another vehicle through the PC5 interface based on V2X broadcast information, and sends the received broadcast information to the vehicle control apparatus 400. In addition, a DSRC (Dedicated Short Range Communication, dedicated short range communications) interface may also serve as an inter-vehicle communications interface.

The vehicle control apparatus 400 includes an ECU (a computer or a computing device), and includes an input/output apparatus, a calculation apparatus, and a storage apparatus (a computer-readable storage medium). The input/output apparatus includes an A/D conversion circuit, a communications interface, a driver, or the like. The calculation apparatus includes, for example, a processor such as a CPU. The vehicle control apparatus 400 functions as the following functional units by executing, by using the calculation apparatus, a program stored in the storage apparatus.

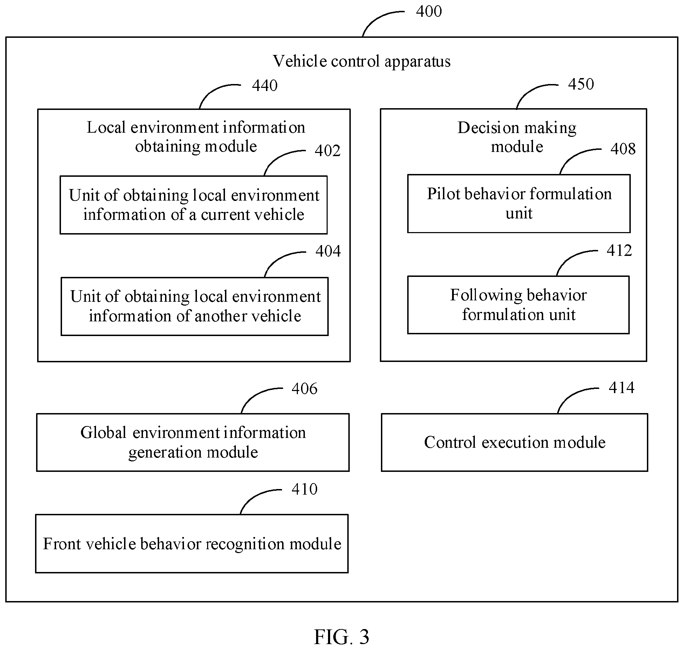

FIG. 3 is a block diagram of a structure of a vehicle control apparatus 400 according to Embodiment 1. As shown in FIG. 3, the vehicle control apparatus 400 includes a local environment information obtaining module 440, a global environment information generation module 406, a front vehicle behavior recognition module 410, a decision making module 450, and a control execution module 414. In this embodiment, the local environment information obtaining module 440 includes a unit 402 of obtaining local environment information of a current vehicle and a unit 404 of obtaining local environment information of another vehicle, and the decision making module 450 includes a pilot behavior formulation unit 408 and a following behavior formulation unit 412. The vehicle control apparatus 400 may further have various functional units (for example, a navigation function) in the conventional technology in addition to this, and descriptions of a known structure is omitted herein.

In addition, when the current vehicle is used as the pilot vehicle A0, the unit 402 of obtaining local environment information of a current vehicle, the unit 404 of obtaining local environment information of another vehicle, the global environment information generation module 406, the pilot behavior formulation unit 408, and the control execution module 414 in these functional units function. When the current vehicle serves as one of the following vehicles A1 to A4, the unit 402 of obtaining local environment information of a current vehicle, the front vehicle behavior recognition module 410, the following behavior formulation unit 412, and the control execution module 414 in these functional units function.

The unit 402 of obtaining local environment information of a current vehicle obtains local environment information indicating the driving environment of the current vehicle. In this implementation, the local environment information includes local topology information, and the local topology information represents location information and speed information of the current vehicle and location information and speed information of an out-of-platoon vehicle B existing around the current vehicle (or sensed by the current vehicle). Herein, the location information of the current vehicle may be generated based on data (for example, a GPS signal) from the positioning unit 100. The speed information of the current vehicle may be generated based on detection data from a vehicle speed sensor (not shown in the figure). The location information and the speed information of the vehicle around the current vehicle not only may be generated based on detection data of each sensor of the sensing unit 200 of the current vehicle, but also may be generated based on data received by the communications unit 300 from an outside (for example, received broadcast data of the out-of-platoon vehicle B). The unit 402 of obtaining local environment information of a current vehicle performs information fusion processing on the obtained data, to generate the local topology information. During fusion processing, for example, if a specific surrounding vehicle detected by the sensing unit 200 is at a same location (or at a same location and a same speed) as a specific surrounding vehicle detected when the communications unit 300 receives a broadcast, it is considered that there is a same vehicle.

The local topology information generated by the unit 402 of obtaining local environment information of a current vehicle includes the location information and the speed information of the local vehicle, and location information and speed information of a vehicle (including a member vehicle and/or an out-of-platoon vehicle) whose broadcast information is received by the current vehicle (or recognized by using the sensing unit 200).

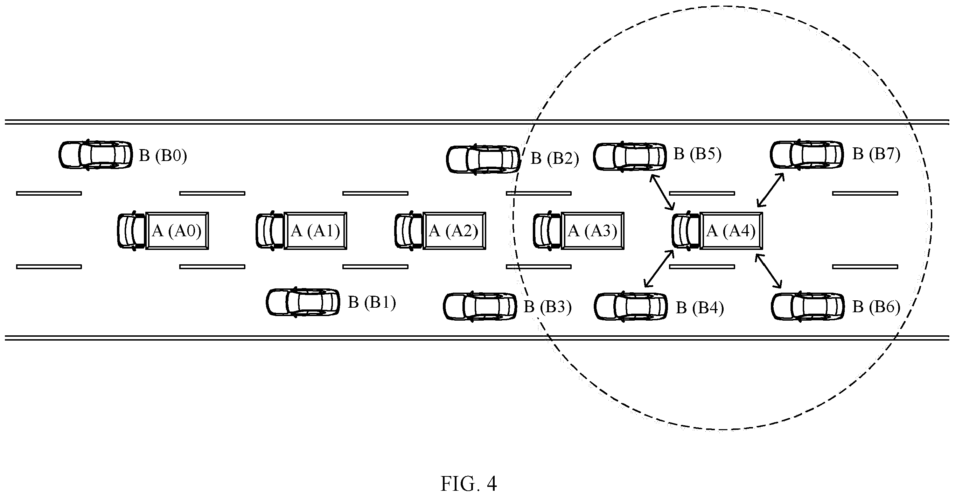

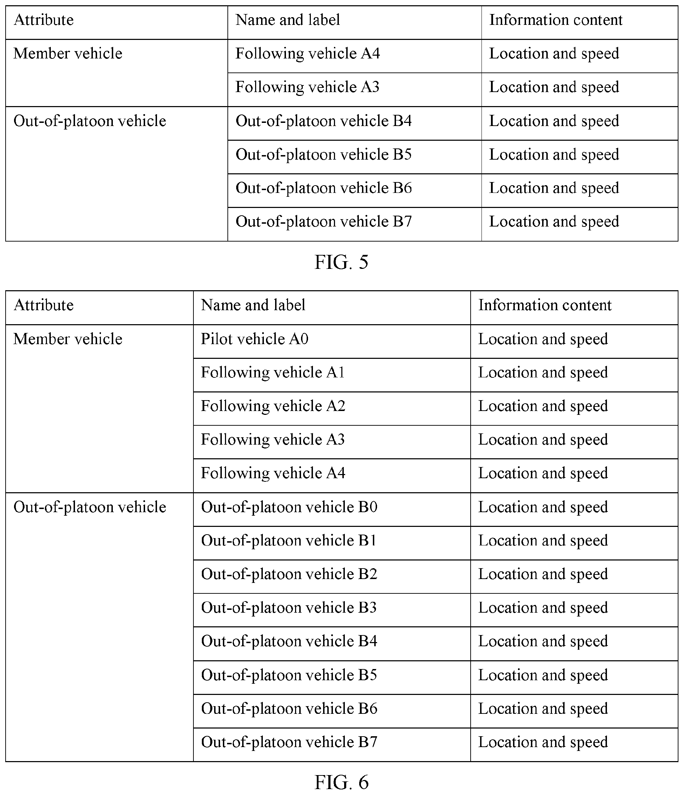

FIG. 4 is a schematic diagram of a driving scenario of a platooning driving system 10 according to Embodiment 1. FIG. 5 shows content of local topology information generated by a unit 402 of obtaining local environment information of a current vehicle of a following vehicle A4 in a scenario in FIG. 4. A circle in FIG. 4 schematically represents a one-hop accessible communication range whose center is the following vehicle A4, and the following vehicle A4 may send broadcast information to a vehicle within this range or receive broadcast information from a vehicle within this range. However, this is merely an example, and is not limited thereto. In this scenario, as shown by a straight line with bidirectional arrows in FIG. 4, for the out-of-platoon vehicle B, the following vehicle A4 may receive information broadcast by out-of-platoon vehicles B4, B5, B6, and B7 (or may recognize information about these vehicles by using a sensing unit 200). In addition, the following vehicle A4 may further receive information broadcast by the following vehicle A3 that serves as a member vehicle A in the platoon (or may recognize information about the following vehicle A3 by using the sensing unit 200). Therefore, the local topology information generated by the following vehicle A4 shown in FIG. 5 includes location information and speed information of the following vehicles A3 and A4 and location information and speed information of the out-of-platoon vehicles B4, B5, B6, and B7. FIG. 5 provides only one example of the local topology information, but the local topology information is not limited thereto. For example, the local topology information may alternatively not include information about a member vehicle other than a member vehicle that serves as the current vehicle. Specifically, the local topology information in FIG. 5 may include the location information and the speed information of the following vehicle A4 and the location information and the speed information of the out-of-platoon vehicles B4, B5, B6, and B7, but does not include the location information and the speed information of the following vehicle A3. In addition, from a perspective of enabling the pilot vehicle A0 to obtain information, a following vehicle may separately send information (location information and speed information) about the following vehicle and sensed information of another vehicle to the pilot vehicle, but does not need to send the information together.

The unit 404 of obtaining local environment information of another vehicle obtains, by using the communications unit 300, local environment information that indicates driving environments of the following vehicles A1 to A4 and that is reported by the following vehicles A1 to A4. In this implementation, the local environment information reported by each of the following vehicles A1 to A4 is local topology information indicating information about each of the following vehicles A1 to A4 and information about a vehicle existing in a preset range around each of the following vehicles A1 to A4. The preset range is a range including a range that can be sensed by the sensing unit 200 and a range in which the communications unit 300 may receive a broadcast (a range that can be sensed through communication).

The global environment information generation module 406 generates the global environment information (which is global topology information in this implementation) indicating the driving environment of the entire platoon, by collecting the local environment information (which is local topology information in this implementation) that indicates the driving environment of the current vehicle and that is generated by the current vehicle and local environment information that indicates a driving environment of the another vehicle and that is obtained by the unit 404 of obtaining local environment information of another vehicle. Sometimes, vehicles detected by the member vehicles are repeated. For example, an out-of-platoon vehicle B detected by the pilot vehicle A0 and an out-of-platoon vehicle B detected by the following vehicles A1 to A4 that drive closely after the pilot vehicle A0 may be repeated. Therefore, when the global environment information generation module 406 generates the global environment information based on the local topology information, fusion processing may be performed based on a location of a vehicle, or the like, to remove a repetition.

In this implementation, the global topology information includes location information and speed information of all the member vehicles A and location information and speed information that are of all the out-of-platoon vehicles B and that are recognized by each member vehicle A (recognized by using the sensing unit and recognized by receiving communication information such as broadcast information). A distance relationship between vehicles and relative speed information may be obtained based on the global topology information.

FIG. 6 shows content of global topology information generated by a global environment information generation module 406 in a pilot vehicle A0 in a scenario in FIG. 4. As shown in FIG. 6, the global topology information includes the location information and the speed information of all the member vehicles A, namely, the pilot vehicle A0 and the following vehicles A1 to A4, and location information and speed information of out-of-platoon vehicles B0, B1, B2, B3, B4, B5, B6, and B7 (B0 to B7) that are located around the member vehicles A.

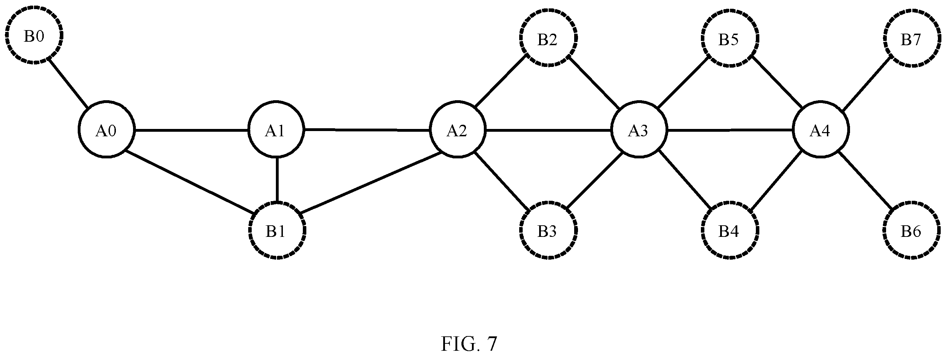

Based on local topology information reported in real time by the following vehicles A1 to A4, the global environment information generation module 406 of the pilot vehicle A0 can generate a dynamic global topology diagram, and use the dynamic global topology diagram as the global topology information. FIG. 7 is a schematic global topology diagram of global topology information in a scenario in FIG. 4. In FIG. 7, nodes indicated by solid-line circles represent member vehicles A, and nodes indicated by dashed-line circles represent out-of-platoon vehicles B (B0 to B7). If two nodes are directly connected through a link including no another node, it indicates that when the two nodes are direct one-hop accessible during mutual communication, and the two nodes are adjacent nodes. In addition, for ease of description, a vehicle is sometimes referred to as a node below.

When the current vehicle is the pilot vehicle A0, the decision making module 450 of the vehicle control apparatus 400 makes a decision about the pilot vehicle A0 and/or the following vehicles A1 to A4 based on the global topology information that indicates the driving environment around the platoon and that is generated by the global environment information generation module 406. In this embodiment, in an example, the pilot behavior formulation unit 408 of the decision making module 450 formulates, based on the global topology information, a driving behavior such as acceleration, braking, a lane change, or current situation maintainance of the current vehicle that serves as the pilot vehicle A0.

The front vehicle behavior recognition module 410 recognizes, based on information obtained by the sensing unit 200, a driving behavior such as acceleration, braking, a turn, or a lane change of a member vehicle A located in front of the current vehicle.

The following behavior formulation unit 412 formulates, based on the driving behavior that is of the member vehicle A located in front of the current vehicle and that is recognized by the front vehicle behavior recognition module 410, a driving behavior of the current vehicle that serves as a following vehicle.

When the current vehicle is the pilot vehicle A0, the control execution module 414 controls the driving behavior of the current vehicle based on the behavior formulated by the pilot behavior formulation unit 408. When the current vehicle is one of the following vehicles A1 to A4, the control execution module 414 controls the driving behavior of the current vehicle based on the driving behavior formulated by the following behavior formulation unit 412.

### 1.1.2. Action procedure

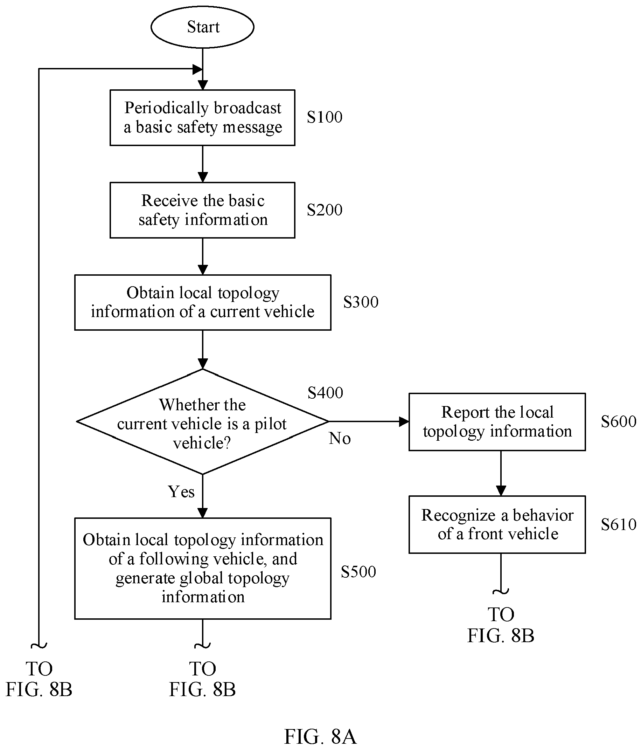

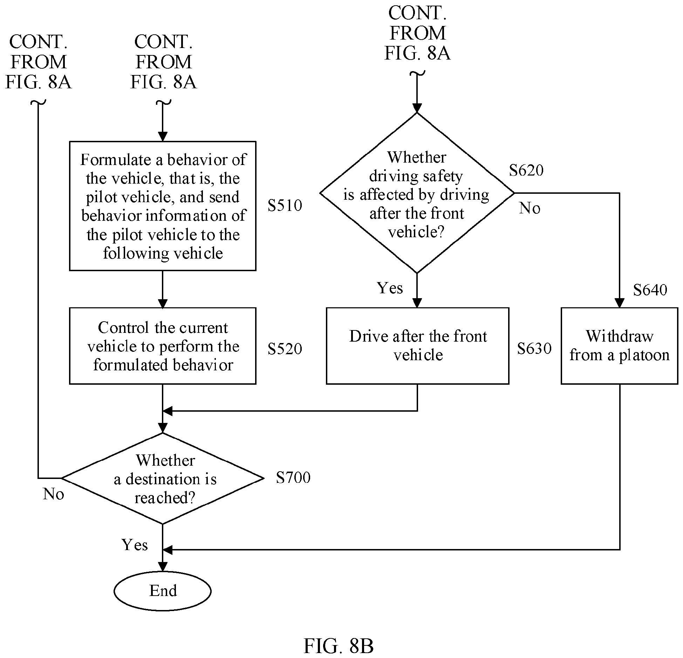

FIG. 8A and FIG. 8B are a flowchart of processing performed in a platooning driving system 10 according to Embodiment 1. When a platoon including at least two member vehicles A drives on an expressway, processing shown in FIG. 8A and FIG. 8B is performed in a specified period.

As shown in FIG. 8A and FIG. 8B, in step S100, a vehicle control apparatus 400 on each member vehicle A periodically broadcasts basic safety message (Basic Safety Message) by using a communications unit 300. Then, step S200 is performed. Herein, the basic safety information is broadcast through the PC5 interface, for example, includes location information and speed information of the member vehicle A.

In step S200, the vehicle control apparatus 400 receives, by using the communications unit 300, basic safety information broadcast by another vehicle. Then, step S300 is performed.

In step S300, the unit 402 of obtaining local environment information of a current vehicle generates local topology information whose center is the current vehicle. Then, step S400 is performed.

In step S400, the vehicle control apparatus 400 determines whether the current vehicle is the pilot vehicle A0. When the current vehicle is the pilot vehicle A0 (S400: Yes), processing in steps S500 to S520 is performed, and when the current vehicle is not the pilot vehicle A0 (S400: No), processing in steps S600 to S640 is performed. Therefore, actually, processing in steps S500 to S520 is performed by the vehicle control apparatus 400 of the pilot vehicle A0, and processing in steps S600 to S640 is performed by the vehicle control apparatus 400 on each of the following vehicles A1 to A4.

In step S500, because it is determined in step S400 that the current vehicle is the pilot vehicle A0, the unit 404 of obtaining local environment information of another vehicle obtains, from each of the following vehicles A1 to A4 by using the communications unit 300, local topology information indicating a driving environment of each following vehicle, and the global environment information generation module 406 generates global environment information (which is global topology information in this implementation) indicating an overall driving environment of the platoon. Then, step S 510 is performed.

In step S510, the pilot behavior formulation unit 408 formulates a behavior such as acceleration, braking, a lane change, or current situation maintainance of the current vehicle based on the global topology information, and sends, to the following vehicles A1 to A4 by using the communications unit 300, information (behavior information of the pilot vehicle) indicating a driving behavior to be performed by the current vehicle. Then, step S520 is performed. Communication between member vehicles A may be performed in a communication method in the conventional technology. Details are not described herein.

In step S520, the control execution module 414 enables the pilot vehicle A0 to execute the driving behavior formulated in step S510. Then, step S700 is performed.

In step S600, because it is determined in step S400 that the current vehicle is not the pilot vehicle A0, in other words, the current vehicle is one (anyone) of the following vehicles A1 to A4, the vehicle control apparatus 400 reports, to the pilot vehicle A0 by using the communications unit 300, the local topology information whose center is the current vehicle. Then, step S610 is performed. In this case, when the pilot vehicle A0 falls within a one-hop accessible communication range (can perform direct inter-vehicle communication without a need to perform relaying), the following vehicles A1 to A4 directly send the generated local topology information to the pilot vehicle A0. When the pilot vehicle A0 is not within the one-hop accessible communication range, in other words, cannot directly send the generated local topology information to the pilot vehicle A0, a member vehicle A that serves as a following vehicle and that is different from the current vehicle in the platoon performs relaying, and reports the generated local topology information to the pilot vehicle A0.

In step S610, the front vehicle behavior recognition module 410 recognizes a behavior of a member vehicle A in front of the current vehicle by using the sensing unit 200. In addition, the vehicle control apparatus 400 further receives the behavior information of the pilot vehicle from the pilot vehicle A0 by using the communications unit 300. Then, step S620 is performed.

In step S620, the following behavior formulation unit 412 determines whether driving safety is affected by driving after the member vehicle A in front of the current vehicle (for example, determines whether an obstacle exists). When the driving safety is not affected (S620: Yes), step S630 is performed. When the driving safety is affected (S620: No), step S640 is performed.

In step S630, the following behavior formulation unit 412 formulates the driving behavior of the current vehicle based on the behavior that is of the member vehicle A located in front of the current vehicle and that is recognized in step S610. The control execution module 414 enables the current vehicle to execute the behavior formulated by the following behavior formulation unit 412, so that the current vehicle drives after the member vehicle A in front of the current vehicle. Then, step S700 is performed.

In step S640, the following behavior formulation unit 412 formulates another behavior different from the behavior formulated in step S630, and the control execution module 414 enables the current vehicle to execute the another behavior, in other words, enables the current vehicle not to drive after the member vehicle A in front of the current vehicle, and instead, to withdraw from the platoon. Then, this process ends. In addition, after withdrawing from the platoon, the member vehicle A may join the platoon again in a method in the conventional technology when a condition is met in the future.

In step S700, the vehicle control apparatus 400 determines whether a destination is reached. When the destination is reached (S700: Yes), the procedure ends. When the destination is not reached (S700: No), the procedure returns to step S 100 to perform processing, until the destination is reached.

The foregoing described structure is basically used for the platooning driving system 10 in Embodiment 1. By using the structure in Embodiment 1, in the platooning driving system 10, each member vehicle A generates the local topology information indicating the driving environment of the member vehicle A, the following vehicles A1 to A4 send, to the pilot vehicle A0, the local topology information generated by the following vehicles A1 to A4, and the pilot vehicle A0 generates the global topology information by collecting the local topology information generated by all the member vehicles A, and formulates the driving behavior of the pilot vehicle A0 based on the global topology information. In this way, the pilot vehicle A0 performs determining in consideration of the driving environment of the platoon, to make a decision that seems to be more proper from an overall perspective of the platoon. For example, a case in which a rear vehicle cannot perform following driving and is separated from the platoon may be reduced, or impact exerted by the behavior of the platoon on an out-of-platoon vehicle may be suppressed, to further improve driving safety.

In addition, in Embodiment 1, in step S510, the vehicle control apparatus 400 of the pilot vehicle A0 sends the behavior information of the pilot vehicle to the following vehicles A1 to A4 based on the formulated driving behavior of the current vehicle. However, this is not limited thereto. In this step, only the driving behavior of the current vehicle may be formulated, but the behavior information of the pilot vehicle is not sent to the following vehicles A1 to A4.

### 1.2. Embodiment 2

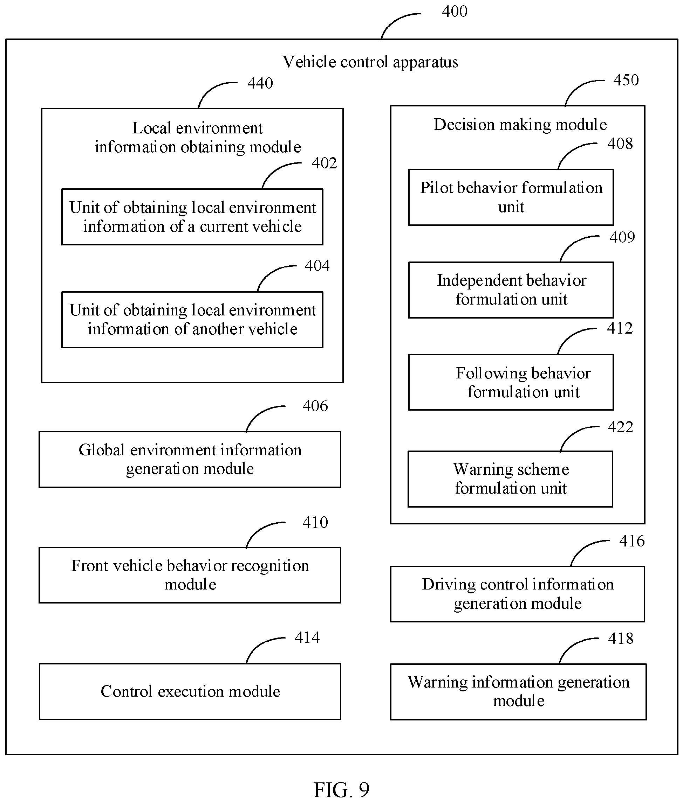

Embodiment 2 of the platooning driving system is described below with reference to FIG. 9 to FIG. 14.

### 1.2.1. Structure

A difference between Embodiment 2 and Embodiment 1 is that a pilot vehicle A0 further sends, to following vehicles A1 to A4, driving control information Mc used to control the following vehicles A1 to A4 to perform specified processing, to execute a specified driving behavior, and broadcasts warning information Ma that is used to notify a situation of a platoon, to warn an out-of-platoon vehicle not to execute a driving behavior such as cutting in line that affects the platoon. Embodiment 2 and Embodiment 1 are basically the same except for this. Therefore, a same structure is marked by using a same reference numeral, and detailed descriptions thereof are omitted.

FIG. 9 is a block diagram of a structure of a vehicle control apparatus 400 according to Embodiment 2. As shown in FIG. 9, in Embodiment 2, in addition to a local environment information obtaining module 440, a global environment information generation module 406, a front vehicle behavior recognition module 410, a decision making module 450, and a control execution module 414, the vehicle control apparatus 400 further includes a driving control information generation module 416 and a warning information generation module 418. In addition to a pilot behavior formulation unit 408 and a following behavior formulation unit 412, the decision making module 450 of the vehicle control apparatus 400 further includes an independent behavior formulation unit 409 and a warning scheme formulation unit 422. These newly added functional units function when a current vehicle serves as the pilot vehicle A0, and do not function when the current vehicle serves as one of following vehicles A1 to A4. Structures of a unit 402 of obtaining local environment information of a current vehicle, a unit 404 of obtaining local environment information of another vehicle, the global environment information generation module 406, the pilot behavior formulation unit 408, the front vehicle behavior recognition module 410, and the control execution module 414 are basically the same as those in Embodiment 1, and descriptions are omitted herein.

The following describes the independent behavior formulation unit 409, the following behavior formulation unit 412, the driving control information generation module 416, and the warning information generation module 418 that are different from those in Embodiment 1.

In this embodiment, the pilot vehicle A0 may specify that all or some of the following vehicles A1 to A4 execute a behavior such as a lane change. In this case, the independent behavior formulation unit 409 of the pilot vehicle A0 formulates, based on global topology information, an independent behavior to be executed by a specific following vehicle in the following vehicles A1 to A4. The independent behavior is different from a behavior of driving after the pilot vehicle A0.

Different from Embodiment 1, in Embodiment 2, when receiving the following driving control information Me, the following behavior formulation unit 412 further formulates a driving behavior of the current vehicle based on the driving control information Mc. When driving safety is not affected when driving is performed based on the driving control information Me, the following behavior formulation unit 412 preferentially formulates the driving behavior of the current vehicle based on the driving control information Mc.

When the independent behavior formulation unit 409 has formulated the independent behavior to be executed by the specific following vehicle, the driving control information generation module 416 generates the driving control information Mc to be sent to the specific following vehicle (a target vehicle), to indicate the specific following vehicle to execute the independent behavior. A driving behavior used as the independent behavior may be, for example, a driving behavior such as acceleration, braking, a turn, or a lane change.

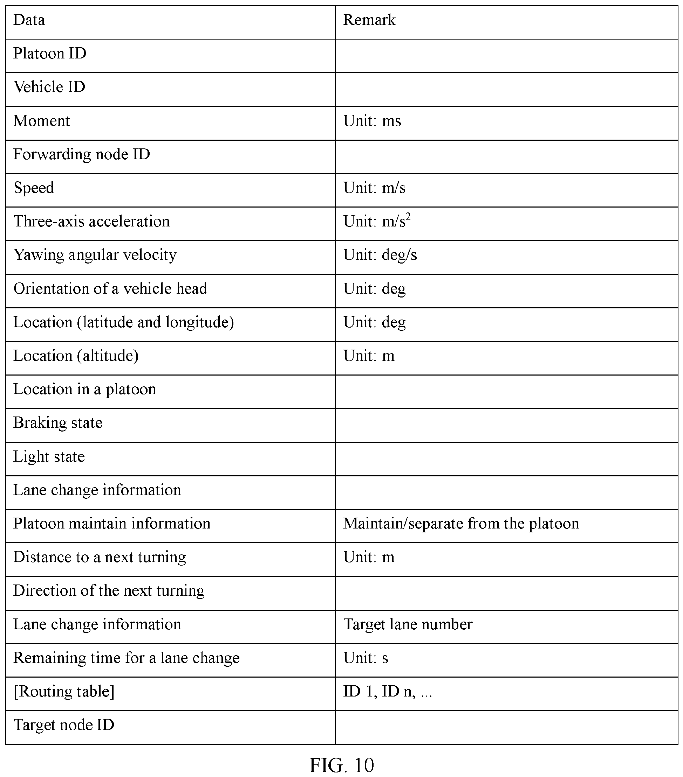

FIG. 10 is a schematic diagram of content of driving control information Me according to Embodiment 2. As shown in FIG. 10, the driving control information Mc includes identity identification information such as a platoon number, a vehicle number, a forwarding node ID, and a target node ID, and information that can indicate content of a specific driving behavior such as lane change information, a time period existing before a next turn, and lane change information. In addition, the driving control information Mc further includes routing table information that is used as an optional item. The generated driving control information Mc is directly sent to the target vehicle in a one-hop accessible case, and is forwarded to the target vehicle by using another following vehicle in a one-hop unaccessible case.

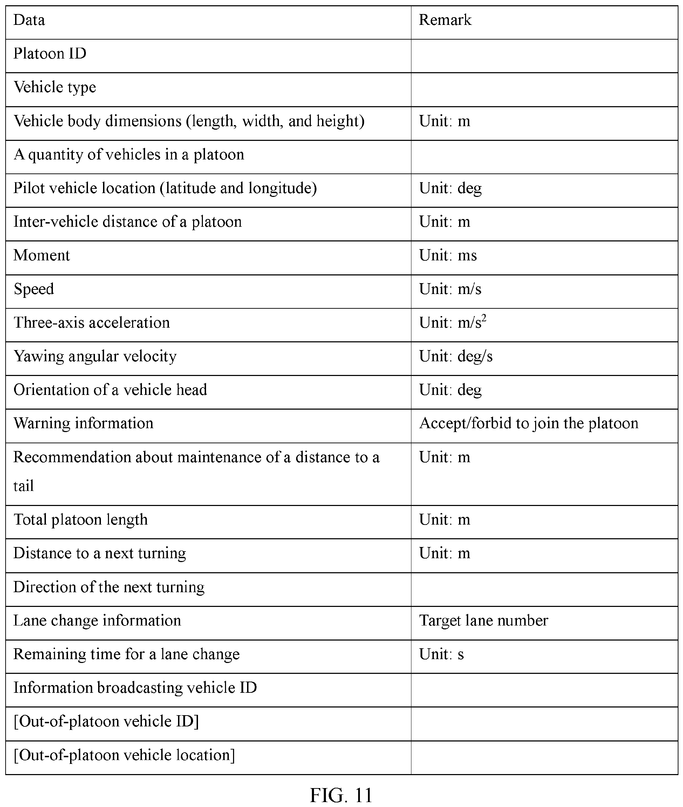

The warning information generation module 418 generates warning information Ma that is used to notify the situation of the platoon to a surrounding out-of-platoon vehicle B through broadcasting, or the like. FIG. 11 is a schematic diagram of content of warning information Ma according to Embodiment 2. As shown in FIG. 11, the warning information Ma includes information indicating a condition of the platoon such as the platoon number, a vehicle type, or an orientation of a vehicle head, warning information, and warning information for the out-of-platoon vehicle B such as a recommendation about maintainance of a distance to a tail. The warning information Ma further includes information such as an out-of-platoon vehicle ID or a location of an out-of-platoon vehicle that is used as an optional item.

The warning scheme formulation unit 422 selects a specific member vehicle A in the platoon to broadcast (publish) the warning information Ma generated by the warning information generation module 418. In this embodiment, in an example, the warning scheme formulation unit 422 selects the pilot vehicle A0 and all the following vehicles A1 to A4 to broadcast (publish) the warning information Ma.

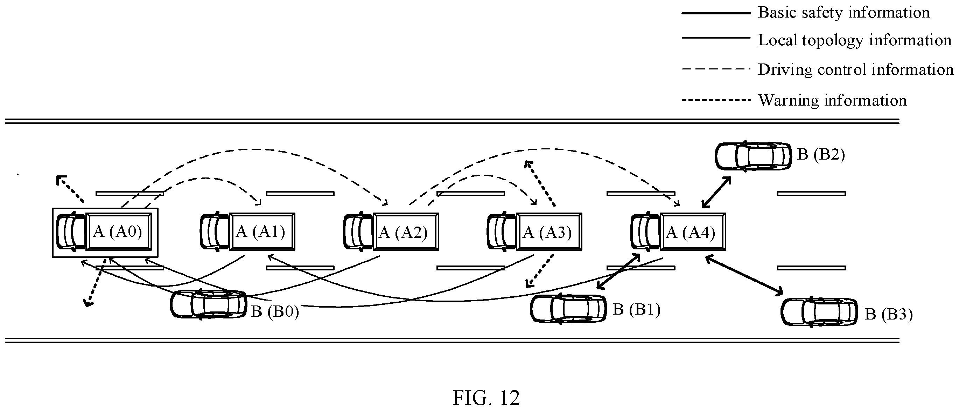

In Embodiment 2, at least four types of information, namely, basic safety information, local topology information, the driving control information Mc, and the warning information Ma are transmitted. FIG. 12 is a schematic diagram of transfer mechanisms of various information according to Embodiment 2. In FIG. 12, an arrow of a solid straight line indicates broadcasting of the basic safety information, an arrow of a dashed straight line indicates broadcasting of the warning information Ma, an arrow of a dashed curve indicates sending of the driving control information Mc, and an arrow of a solid curve indicates reporting of the local topology information. However, these are merely examples, and this is not limited thereto.

### 1.2.2. Action procedure

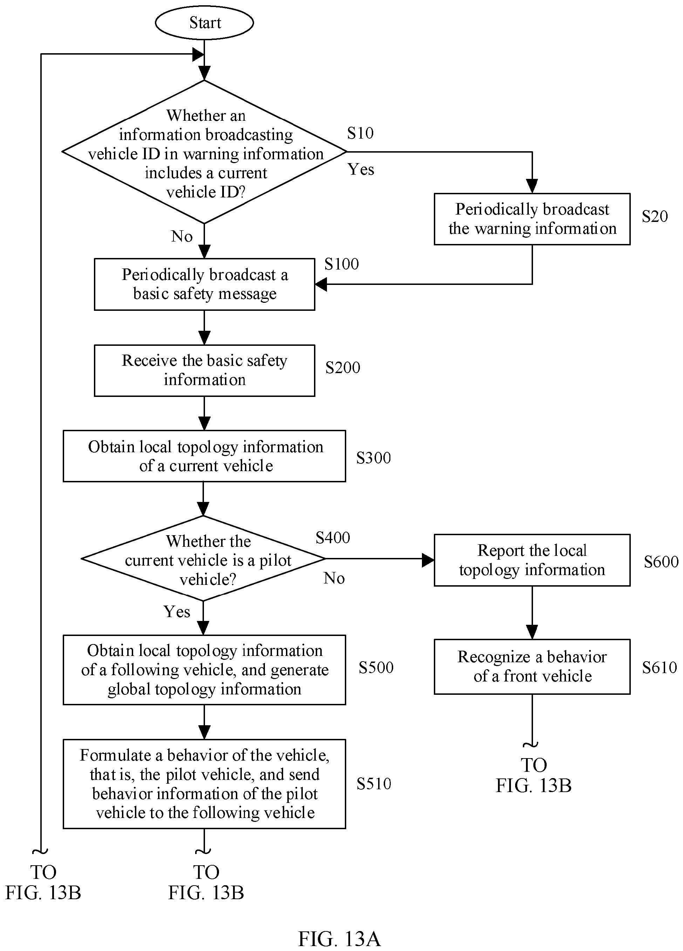

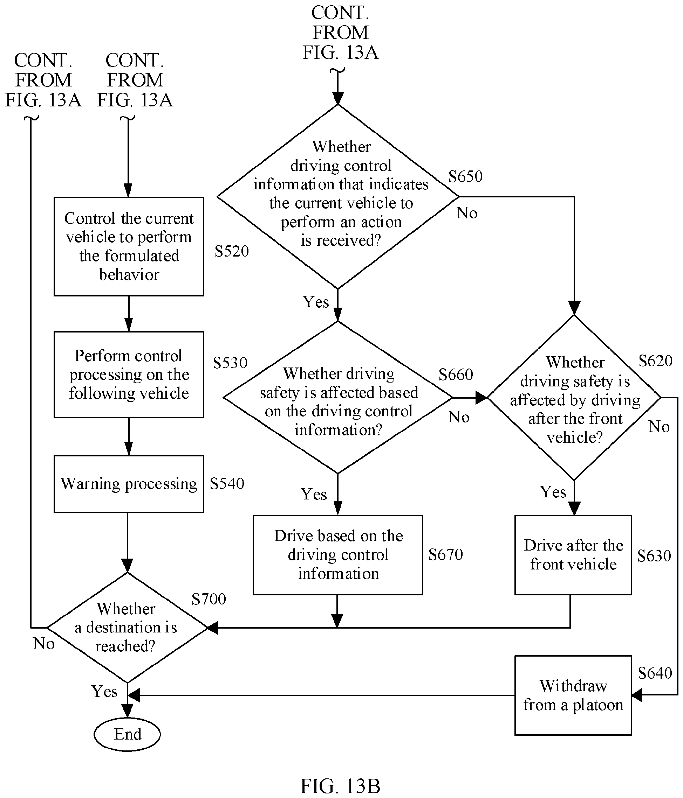

FIG. 13A and FIG. 13B are a flowchart of processing performed in a vehicle platooning driving system 10 according to Embodiment 2.

First, in step S10, the vehicle control apparatus 400 determines whether an information broadcasting vehicle ID in the warning information Ma includes a current vehicle ID. When the information broadcasting vehicle ID includes the current vehicle ID (S10: Yes), step S20 is performed. When the information broadcasting vehicle ID in the warning information Ma does not include the current vehicle ID (S10: No), step S100 is performed.

In step S20, the vehicle control apparatus 400 periodically broadcasts the warning information Ma by using a communications unit 300. Then, step S200 is performed.

Processing in steps S100, S200, S300, S400, S500, S510, S520, S600, and S610 is the same as that in Embodiment 1. Descriptions are omitted herein.

In step S530 after step S520, control processing is performed on a following vehicle. To be specific, the independent behavior formulation unit 409 formulates an independent behavior to be performed by the following vehicle, the driving control information generation module 416 generates the driving control information Mc based on the formulated independent behavior, and the vehicle control apparatus 400 sends the driving control information Mc to a corresponding following vehicle (the target vehicle or a target node) by using the communications unit 300. Then, step S540 is performed. Herein, driving control information Mc for all the following vehicles may be generated, or driving control information Mc for only some following vehicles may be generated. Specifically, the pilot vehicle A0 determines whether the driving control information Mc for all the following vehicles or the driving control information Mc for only some following vehicles is generated. Alternatively, it should be noted that, when the independent behavior formulation unit 409 does not formulate an independent behavior that needs to be performed by the following vehicles A1 to A4, in other words, the following vehicles A1 to A4 do not need to execute an independent behavior different from a following driving behavior, driving control information Mc for the following vehicles A1 to A4 is not generated.

In step S540, warning processing is performed. To be specific, the warning scheme formulation unit 422 selects all member vehicles A to broadcast the warning information Ma, the warning information generation module 418 generates the warning information Ma, and the current vehicle, namely, the pilot vehicle A0 broadcasts the warning information Ma, and indicates the following vehicles A1 to A4 to publish the warning information Ma. Then, step S700 is performed.

After step S610, step S650 is performed. In step S650, the following behavior formulation unit 412 determines whether driving control information Mc that indicates the current vehicle to perform an action is received, and specifically, determines whether driving control information Mc whose target node ID is the current vehicle ID is received. When the driving control information Mc whose target node ID is the current vehicle ID is received (S650: Yes), step S660 is performed. When the driving control information Mc whose target node ID is the current vehicle ID is not received (S650: No), step S620 is performed.

In step S660, the following behavior formulation unit 412 determines whether driving safety is affected when driving is performed based on the driving control information Me, in other words, whether driving safety is affected when the independent behavior indicated by the driving control information Mc is performed. When the driving safety is not affected (S660: Yes), step S670 is performed. When the driving safety is affected (S660: No), step S620 is performed.

In step S670, the control execution module 414 enables the current vehicle to drive based on the received driving control information Mc. Then, step S700 is performed.

Processing in steps S620, S630, S640, and S700 is the same as that in Embodiment 1. Descriptions are omitted herein.

The foregoing described structure is basically used for the platooning driving system 10 in Embodiment 2. By using the structure of Embodiment 2, in the platooning driving system 10, when formulating a driving behavior that is used as an independent behavior and that is to be performed by the specific following vehicle, the vehicle control apparatus 400 of the pilot vehicle A0 generates the driving control information Mc to be sent to the specific following vehicle, and the vehicle control apparatus 400 of the pilot vehicle A0 further generates the warning information Ma used to broadcast the situation of the platoon to the surrounding out-of-platoon vehicle B. In addition, a vehicle control apparatus 400 of each of the following vehicles A1 to A4 preferentially drives based on the driving control information Mc when receiving the driving control information Mc that indicates each of the following vehicles A1 to A4 to execute an independent behavior. In this case, the pilot vehicle A0 sends the driving control information Mc to the following vehicles A1 to A4, to flexibly cope with different road conditions, and improve platooning driving flexibility. In addition, the warning information Ma is sent to the out-of-platoon vehicle B, to notify the situation of the platoon, so as to give a warning to the out-of-platoon vehicle B, for example, to remind, not to cut in on the platoon, an out-of-platoon vehicle B that wants to cut in on the platoon, thereby improving platooning driving safety and smoothness.

In addition, in this embodiment, a sequence of steps S520, S530, and S540 is not limited to a sequence in the foregoing descriptions, and steps S520, S530, and S540 may be changed or performed simultaneously.

### 1.2.3. Variant example of Embodiment 2

In Embodiment 2, step S610 is performed before step S650. In other words, a behavior of a front vehicle is recognized first, and then, whether driving control information Mc whose target node ID is a current vehicle ID is received is determined. However, this is not limited thereto. Alternatively, whether driving control information Mc whose target node ID is a current vehicle ID is received may be determined first. When the driving control information Mc is received and driving safety is not affected when driving is performed based on the driving control information Mc, driving is directly performed based on the driving control information Mc without recognizing a behavior of a front vehicle. The behavior of the front vehicle is recognized only when the driving control information Mc is not received or when driving safety is affected when driving is performed based on the driving control information Mc.

In addition, in Embodiment 2, the warning scheme formulation unit 422 selects all member vehicles A to send warning information Ma. However, this embodiment of this application is not limited thereto. For example, to suppress interference between radio signals, the warning scheme formulation unit 422 may alternatively formulate a warning scheme in the following manners:
Manner 1: A pilot vehicle A0 broadcasts the warning information Ma, and a following vehicle whose sequence number can be divided by N (N ≥ 2) is indicated to broadcast the warning information Ma, where the member vehicles A are numbered sequentially starting from the pilot vehicle A0, and a sequence number of the pilot vehicle A0 is 0.
Manner 2: A pilot vehicle A0 broadcasts the warning information Ma, one location point is set at an interval of a distance L based on a distance from the pilot vehicle A0, and a following vehicle closest to the location point is selected based on each location point, and is indicated to broadcast the warning information Ma.
Manner 3: A pilot vehicle A0 broadcasts the warning information Ma, following vehicles A1 to A4 each generate a random value within a range of 0 to 1, the random values generated by the following vehicles A1 to A4 are separately compared with a specified value that is preset, and a following vehicle whose random value is greater than the specified value is indicated to broadcast the warning information Ma.

In addition, in Embodiment 2, the pilot vehicle A0 formulates, based on global topology information, a driving behavior such as acceleration, braking, a lane change, or current situation maintainance of a current vehicle, so as to guide a platoon to execute a specified driving behavior. However, this embodiment of this application is not limited thereto. When the pilot vehicle A0 determines, based on the global topology information, that the current vehicle is temporarily unsuitable to guide the platoon to execute the specified driving behavior, a proper following vehicle may be indicated to guide the platoon, or a corresponding following vehicle may be indicated to execute a proper driving behavior to prepare for a subsequent driving behavior of the platoon.

### 1.2.4. Specific application example of a variant example of Embodiment 2

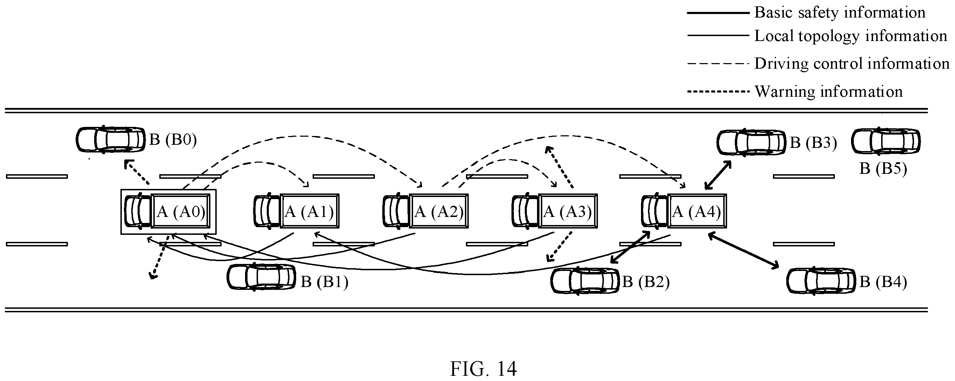

FIG. 14 provides an application scenario of a variant example of Embodiment 2. In the scenario in FIG. 14, the pilot vehicle A0 determines, based on the global topology information, that the pilot vehicle A0 needs to guide the platoon to change a lane (for example, a right turn needs to be made in front). However, because there is an out-of-platoon vehicle B0 on a right side of the pilot vehicle A0, the pilot vehicle A0 is unsuitable to guide the platoon by changing a lane first. In this case, the pilot vehicle A0 may send the driving control information Mc, to direct a following vehicle A4 at the tail of the platoon to change a lane first, so as to occupy the lane to help the entire platoon to change a lane subsequently; or may send the driving control information Mc, to direct a following vehicle A1 to change a lane first, so that the following vehicle A1 guides following vehicles A2, A3, and A4 to change a lane; or may send the driving control information Mc, to direct the following vehicles A1 to A4 to change a lane simultaneously.

### 1.3. Embodiment 3

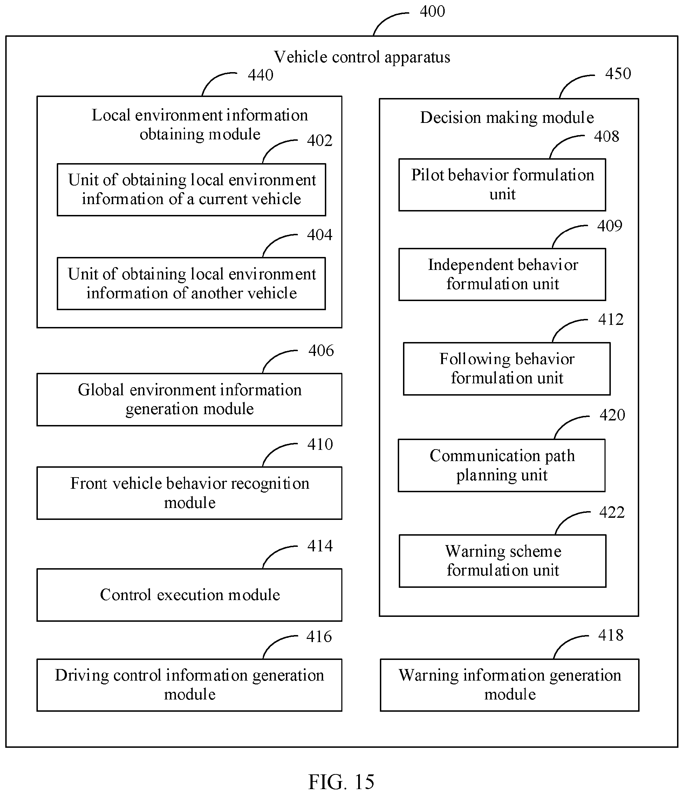

Embodiment 3 of the platooning driving system is described below with reference to FIG. 15 to FIG. 19.

### 1.3.1. Structure

As described above, in Embodiment 2, driving control information Mc is sent to a member vehicle A in a platoon, and warning information Ma is broadcast to an out-of-platoon vehicle B. In Embodiment 3, based on Embodiment 2, a vehicle control apparatus 400 of a pilot vehicle A0 plans, based on a status of a communication link between member vehicles A in the platoon, a preferred path on which the pilot vehicle A0 sends the driving control information Mc to following vehicles A1 to A4, and notifies the preferred path to the following vehicles A1 to A4 in the platoon. In addition, a vehicle control apparatus 400 of the pilot vehicle A0 designs a preferred warning information Ma broadcasting scheme based on a status of a communication link between vehicles in global topology information, to broadcast the warning information Ma to the out-of-platoon vehicle B. This is described in detail below.

In Embodiment 3, local topology information generated by a unit 402 of obtaining local environment information of a current vehicle not only includes location information and speed information, but also includes information about a status of a communication link between the current vehicle and another vehicle (including a member vehicle and an out-of-platoon vehicle) that is one-hop accessible. Therefore, in addition to status information of the following vehicles A1 to A4 and status information (a location and a speed) of all adjacent nodes of the following vehicles A1 to A4, local topology information reported by the following vehicles A1 to A4 to the pilot vehicle A0 includes information about a status of a communication link between adjacent nodes. The information about the status of the communication link is obtained based on information from a communications unit 300. The pilot vehicle A0 collects local topology information of all member vehicles A in the platoon, generates a dynamic topology diagram of the platoon and a dynamic topology diagram of an associated vehicle around the platoon, and uses the dynamic topology diagrams as global topology information. Information about a status of a communication link between two vehicles that are adjacent nodes in communication may be obtained based on the global topology information in Embodiment 3.

In addition, in this embodiment, in the global topology information, reliability S indicating reliability (stability) of the communication link is marked based on the information about a status of a communication link, for example, an SNR (signal-to-noise ratio) or an RI (rank indication). The reliability S is, for example, a value between 0 and 1. A higher value of the reliability S indicates better communication quality.

FIG. 15 is a block diagram of a structure of a vehicle control apparatus 400 according to Embodiment 3. As shown in FIG. 15, in this embodiment, a communication path planning unit 420 that functions when the current vehicle serves as the pilot vehicle A0 is added to a decision making module 450. The unit 402 of obtaining local environment information of a current vehicle, a unit 404 of obtaining local environment information of another vehicle, a global environment information generation module 406, a pilot behavior formulation unit 408, an independent behavior formulation unit 409, a front vehicle behavior recognition module 410, a following behavior formulation unit 412, a control execution module 414, a driving control information generation module 416, and a warning information generation module 418 are basically the same as those in Embodiment 2. Descriptions are omitted herein. The following describes only the newly added communication path planning unit 420 and a warning scheme formulation unit 422 that is different from that in Embodiment 2.

The communication path planning unit 420 plans a communication path between the pilot vehicle A0 and the following vehicles A1 to A4 based on the global topology information, and in particular, based on the information about a status of a communication link between member vehicles. In this embodiment, the communication path is used to send the driving control information Mc.

Different from Embodiment 2, in this embodiment, the warning scheme formulation unit 422 formulates, based on the global topology information, and in particular, based on the information about a communication link between a member vehicle and an out-of-platoon vehicle, a scheme for sending the warning information Ma to the out-of-platoon vehicle B. Specifically, a specific member vehicle or specific member vehicles are selected to send (broadcast in this implementation) the warning information Ma.

### 1.3.2. Action procedure

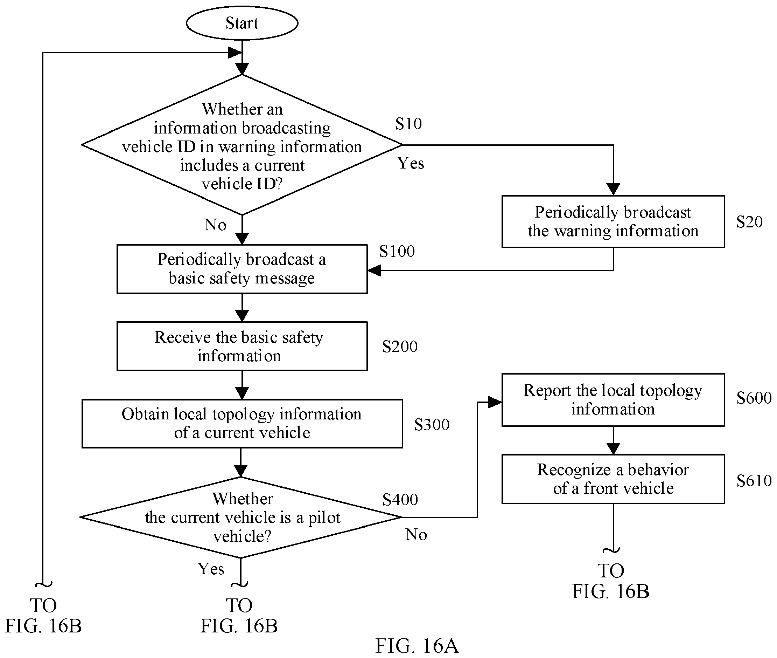

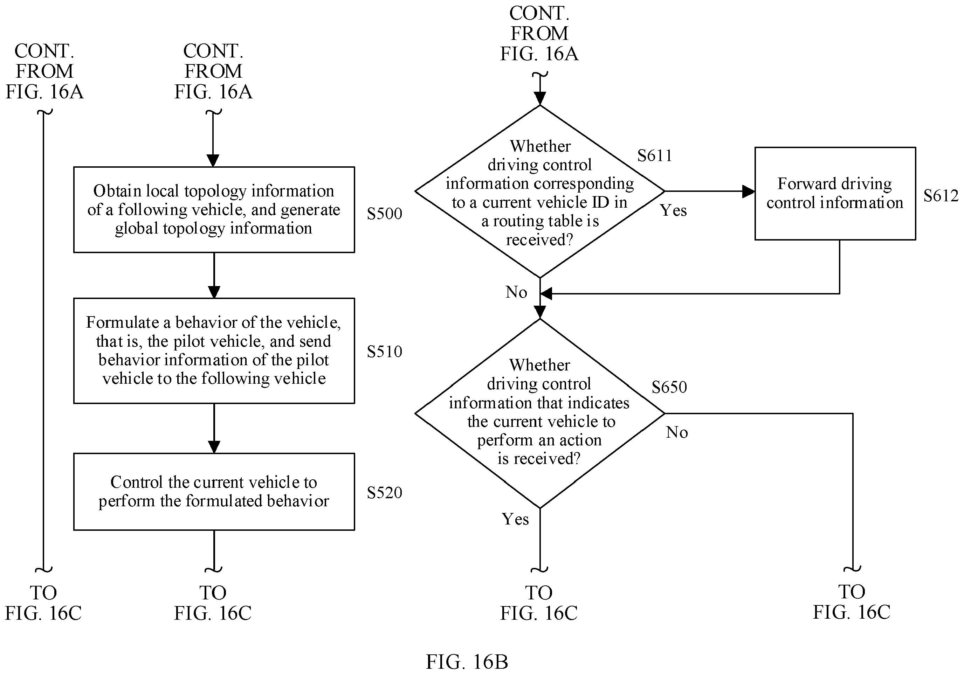

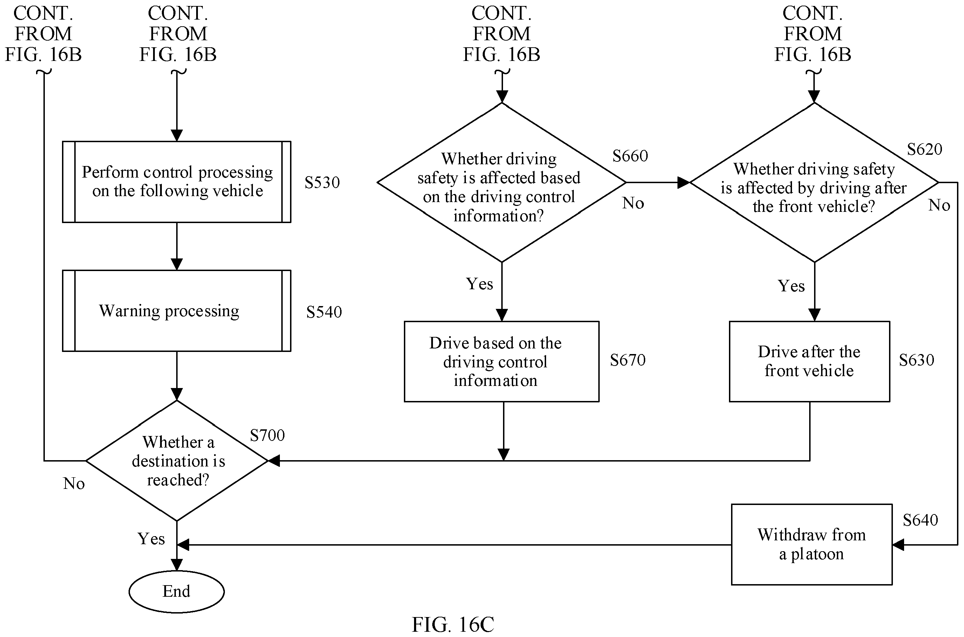

FIG. 16A, FIG. 16B, and FIG. 16C are a flowchart of processing performed in a platooning driving system 10 according to Embodiment 3.

Processing in steps S10, S20, S100, S200, S300, S400, S500, S510, S520, S600, and S610 in FIG. 16A and FIG. 16B is the same as that in Embodiment 2. Descriptions are omitted herein.

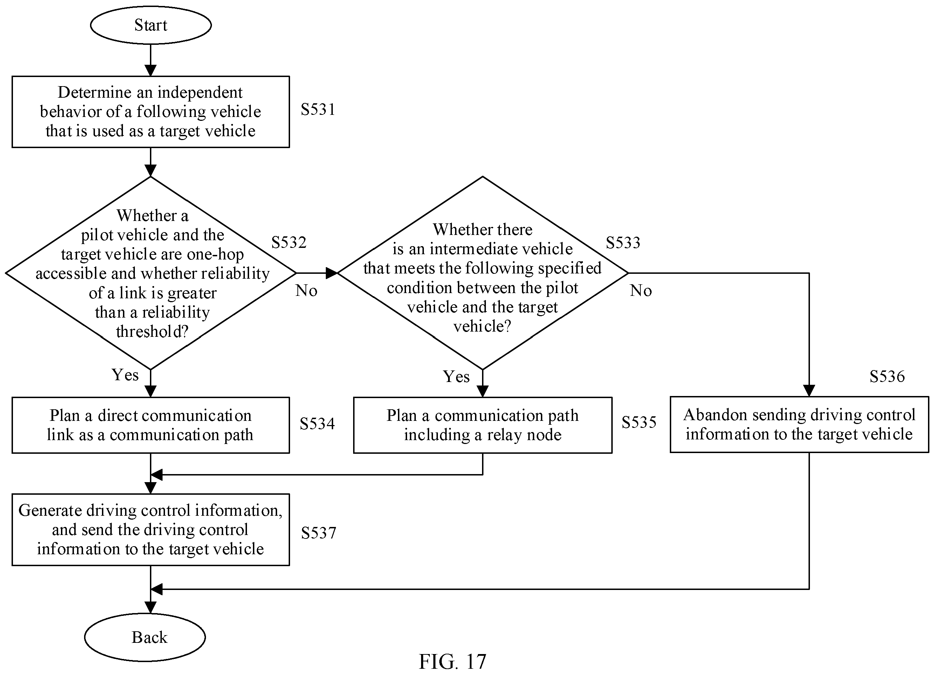

After step S520, step S530 is performed. In step S530, control processing is performed on a following vehicle. To be specific, the independent behavior formulation unit 409 formulates, based on global environment information, an independent behavior that needs to be executed by the following vehicle and that is different from a following behavior, the communication path planning unit 420 plans a communication path that has high reliability and that is used to send the driving control information Mc, the driving control information generation module 416 generates the driving control information Mc based on the formulated independent behavior, and the vehicle control apparatus 400 sends the driving control information Mc by using the communications unit 300. Then, step S540 is performed. Details of "control processing is performed on the following vehicle" are described below with reference to FIG. 17.

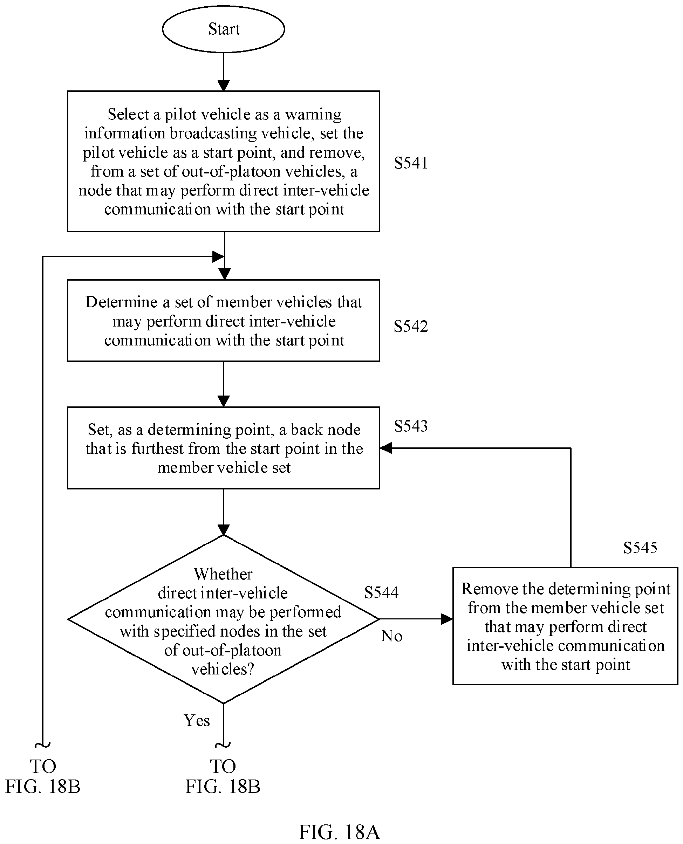

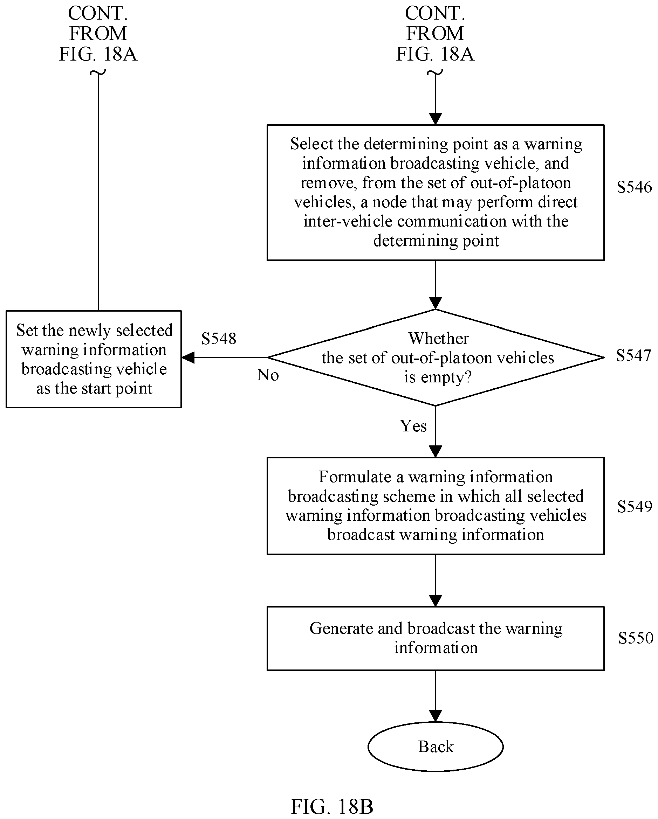

In step S540, warning processing is performed. To be specific, the warning scheme formulation unit 422 formulates a warning information broadcasting scheme in which all out-of-platoon vehicles B associated with the platoon can be covered and there is a small quantity of warning information broadcasting vehicles, the warning information generation module 418 generates the warning information Ma, and the vehicle control apparatus 400 broadcasts the warning information Ma by using the communications unit 300. Then, step S700 is performed. Details of "warning processing" are described below with reference to FIG. 18A and FIG. 18B.

After step S610, step S611 is performed. Whether driving control information Mc corresponding to a current vehicle ID in a routing table (a transmission path to a target node) is received is determined in step S611. When the driving control information Mc corresponding to the current vehicle ID in the routing table is received (S611: Yes), step S612 is performed. When the driving control information Mc corresponding to the current vehicle ID in the routing table is not received (S611: No), step S650 is performed.

In step S612, the vehicle control apparatus 400 enables the current vehicle to forward the received driving control information Mc. Then, step S650 is performed.

Processing in steps S650, S620, S630, S640, S660, S670, and S700 is the same as that in Embodiment 2. Descriptions are omitted herein.

FIG. 17 is a sub-procedure of FIG. 16A, FIG. 16B, and FIG. 16C, and is a flowchart of details of performing control processing on a following vehicle in step S530 according to Embodiment 3.

In step S531 in FIG. 17, the independent behavior formulation unit 409 formulates an independent behavior of one or some following vehicles (a target vehicle or a target node) based on the global environment information. Specifically, for example, when it is determined that the pilot vehicle A0 is unsuitable to change a lane, a following vehicle may change a lane first.

In step S532, the communication path planning unit 420 determines whether the pilot vehicle A0 and the target vehicle are one-hop accessible (without a need to perform relaying) and whether reliability S of a link is greater than a reliability threshold S0. Herein, the reliability threshold S0 is a preset threshold indicating that information can be reliably transmitted. When the pilot vehicle A0 and the target vehicle are one-hop accessible and the reliability S of a link is greater than the reliability threshold S0 (S532: Yes), step S534 is performed. When the pilot vehicle A0 and the target vehicle are one-hop unaccessible and the reliability S of a link is less than the reliability threshold S0 (S532: No), step S534 is performed.

In step S533, the communication path planning unit 420 selects a relay node from an intermediate vehicle (a member vehicles A) that exists between the pilot vehicle A0 and the target vehicle. A specific selection manner is to determine whether there is an intermediate vehicle that meets the following specified condition. When there is an intermediate vehicle that meets the specified condition (S533: Yes), step S535 is performed. When there is no intermediate vehicle that meets the specified condition (S533: No), step S535 is performed.

Herein, the specified condition is to assume that reliability of a link between the pilot vehicle A0 and the intermediate vehicle is S1 and that reliability of a link between the intermediate vehicle and the target vehicle is S2, S1 ^{∗} S2 ≥ S0. When there are a plurality of intermediate vehicles between the pilot vehicle A0 and the target vehicle, whether an intermediate vehicle meets the specified condition is first determined, where a quantity of member vehicles between the intermediate vehicle and the pilot vehicle A0 is the same as a quantity of member vehicles between the intermediate vehicle and the target vehicle.

If there are two such intermediate vehicles, a vehicle closer to the pilot vehicle A0 is first selected for determining. Then, a first front vehicle, a first back vehicle, a second front vehicle, a second back vehicle, a third front vehicle, and the like of the intermediate vehicle are sequentially selected, to determine whether the vehicles meet the specified condition. When one intermediate vehicle that meets the specified condition is selected, determining in step S533 ends.

In step S534, the communication path planning unit 420 plans a direct communication link between the pilot vehicle and the target vehicle as a communication path, to send the driving control information Mc.

In step S535, the communication path planning unit 420 uses, as the relay node, the intermediate vehicle that meets the specified condition and that is determined in step S533, and plans a communication path including the relay node (for example, the planned communication path is as follows: Pilot vehicle A0 -> Relay node -> Target vehicle), to send the driving control information Mc to the target vehicle.

In step S536, the communication path planning unit 420 gives up sending the driving control information Mc to the target vehicle.

In addition, in step S537, the driving control information generation module 416 generates the driving control information Mc, and the vehicle control apparatus 400 sends the driving control information Mc to the target vehicle by using the communications unit 300. Then, the procedure returns, and the sub-procedure ends.

FIG. 18A and FIG. 18B are a sub-procedure of FIG. 16A, FIG. 16B, and FIG. 16C, and is a flowchart of details of performing warning processing in step S540 according to Embodiment 3.

In step S541 in FIG. 18A, the warning scheme formulation unit 422 selects the pilot vehicle A0 as a warning information broadcasting vehicle, and sets the pilot vehicle A0 as a start point. A node that may perform direct inter-vehicle communication with the start point is removed from a set of out-of-platoon vehicle nodes in the global topology information. Then, step S532 is performed. Herein, "direct inter-vehicle communication" means that the node and the start point are one-hop accessible and the reliability of a link is greater than the reliability threshold S0.

In step S542, the warning scheme formulation unit 422 determines a set of member vehicle nodes that may perform direct inter-vehicle communication with the start point. Then, step S543 is performed.

In step S543, the warning scheme formulation unit 422 sets, as a determining point, a back member vehicle node that is furthest from the start point and that is in a set of member vehicle nodes that may perform direct inter-vehicle communication with the start point. Then, step S544 is performed.

In step S544, the warning scheme formulation unit 422 determines all out-of-platoon vehicle nodes whose locations are between the determining point and the start point (a platoon advancing direction is used as a reference) in the set of out-of-platoon vehicle nodes, determines whether the determining point may perform direct inter-vehicle communication with each of these nodes, in other words, whether all the out-of-platoon vehicle nodes whose locations are between the determining point and the start point in the set of out-of-platoon vehicles can be covered when the vehicle broadcasts the warning information. When the determining point cannot perform direct inter-vehicle communication with each of these nodes (step S544: No), step S545 is performed. When the determining point may perform direct inter-vehicle communication with each of these nodes (step S544: Yes), step S546 is performed.

In step S545, the warning scheme formulation unit 422 removes the determining point from the set of member vehicle nodes. The procedure returns to step S543.

In step S546, the warning scheme formulation unit 422 selects the determining point as a warning information broadcasting vehicle, and removes, from the set of out-of-platoon vehicle nodes, an out-of-platoon vehicle node that may perform direct inter-vehicle communication with the determining point. Step S547 is performed.

In step S547, whether the set of out-of-platoon vehicle nodes is empty is determined. In other words, when the warning information broadcasting vehicle broadcasts the warning information, whether each out-of-platoon vehicle (all out-of-platoon vehicles associated with the platoon) that is an adjacent node of any vehicle in the platoon can receive the warning information Ma is determined. When the set of out-of-platoon vehicles is not empty (step S547: No), in other words, not all out-of-platoon vehicles associated with the platoon can receive the warning information Ma, step S548 is performed. When the set of out-of-platoon vehicles is empty (step S547: Yes), in other words, all out-of-platoon vehicles associated with the platoon can receive the warning information Ma, step S549 is performed.

In step S548, the warning scheme formulation unit 422 sets a latest selected warning information broadcasting vehicle as a start point. Then, the procedure returns to step S542.

In step S549, the warning scheme formulation unit 422 formulates a warning information broadcasting scheme in which all selected warning information broadcasting vehicles broadcast the warning information. Step S550 is performed.

In step S550, the warning information generation module 418 generates the warning information Ma, and the vehicle control unit 400 broadcasts the warning information Ma by using the communications unit 300. As described above, the warning information Ma includes a corresponding warning information broadcasting vehicle ID, to indicate a corresponding following vehicle to broadcast the warning information Ma.

The foregoing described structure is basically used for the platooning driving system 10 in Embodiment 3. By using the structure in Embodiment 3, in the platooning driving system 10, the vehicle control apparatus 400 of the pilot vehicle A0 is configured to: when sending the driving control information Mc to the following vehicles A1 to A4, plan a sending path of the driving control information Mc based on global topology information including the information about a status of a communication link between adjacent nodes. Therefore, a sending path with high reliability of a link can be planned, to send the driving control information Mc with high reliability within the platoon. In addition, when the platoon broadcasts the warning information Ma to the out-of-platoon vehicle B, a member vehicle A that is to broadcast the warning information Ma is selected based on the global topology information including the information about the status of the communication link between adjacent nodes. Therefore, the warning information Ma can be reliably broadcast to all associated out-of-platoon vehicles B, and a smallest quantity of member vehicles A broadcast the warning information Ma, to reduce signal interference and save energy.

### 1.3.3. Specific application example of Embodiment 3

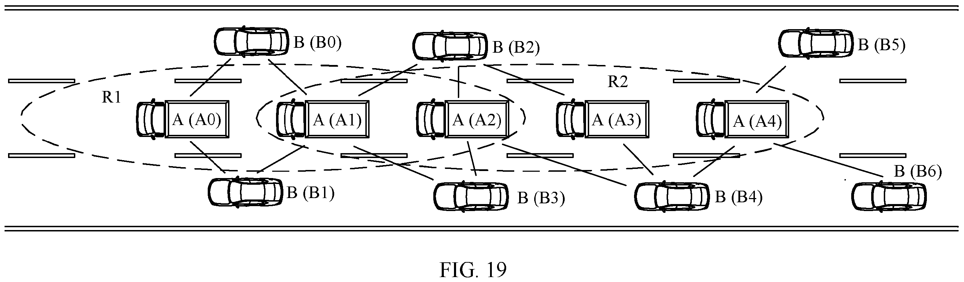

FIG. 19 is a schematic diagram of a platoon driving scenario used to illustrate a specific example of performing control processing and warning processing on a following vehicle according to Embodiment 3. In FIG. 19, a platoon includes a pilot vehicle A0 and following vehicles A1 to A4, and out-of-platoon vehicles B0 to B7 associated with the platoon exist around the platoon.

First, control processing performed on the following vehicle is described by using, as an example, a case existing when the pilot vehicle A0 sends driving control information Mc to the following vehicle A4 that serves as a target vehicle. Ranges R1 and R2 in FIG. 19 represent one-hop accessible cases of member vehicles A. As shown in the ranges R1 and R2, in-platoon vehicles that are within a one-hop accessible communication range of A0 are following vehicles A1 and A2, and in-platoon vehicles that are within a one-hop accessible communication range of A4 are following vehicles A1, A2, and A3. In other words, the pilot vehicle A0 and the following vehicle A4 are one-hop unaccessible during inter-vehicle communication, and relaying needs to be performed.

In this case, following vehicles A1, A2, and A3 that serve as intermediate vehicles exist between the pilot vehicle A0 and the following vehicle A4, and a quantity of member vehicles between an intermediate vehicle and the pilot vehicle A0 is the same as a quantity of member vehicles between the intermediate vehicle and the following vehicle A4, where the intermediate vehicle is the following vehicle A2. Therefore, whether the following vehicle A2 meets a specified condition is determined first.

The following vehicle A2 and the pilot vehicle A0 are in a same range R1, and reliability of a link between the following vehicle A2 and the pilot vehicle A0 is S1. In addition, the following vehicle A2 and the following vehicle A4 are in a same range R2, and reliability of a link between the following vehicle A2 and the following vehicle A4 is S2. If the specified condition, in other words, S1 ^{∗} S2 ≥ S0 is met, the following vehicle A2 is selected as a relay vehicle, and the pilot vehicle A0 sends the driving control information Mc to the following vehicle A4 by using the following vehicle A2. If S1 ^{∗} S2 ≥ S0 is not met, whether a first front vehicle of the following vehicle A2, namely, the following vehicle A1 meets the specified condition is determined, and when the following vehicle A1 meets the specified condition, the pilot vehicle A0 sends the driving control information Mc to the following vehicle A4 by using the following vehicle A1.

Then, that the vehicle control apparatus 400 of the pilot vehicle A0 performs warning processing in a scenario in FIG. 19 is described. FIG. 19 shows out-of-platoon vehicles that are connected to the pilot vehicle A0 and the following vehicles A1 to A4, namely, out-of-platoon vehicles B0 to B6 that can communicate with the platoon. For example, the pilot vehicle A0 and the out-of-platoon vehicle B0 are connected, which indicates that the pilot vehicle A0 and the out-of-platoon vehicle B0 can receive information broadcast by each other, and are adjacent nodes in a schematic global topology diagram. Herein, it is assumed that reliability of a link between adjacent nodes is greater than a reliability threshold S0 (direct inter-vehicle communication may be performed). In addition, because a case existing when information is broadcast to the out-of-platoon vehicle B is mainly described, a connection between member vehicles A is omitted. As described above, the one-hop accessible cases of member vehicles A are represented by the ranges R1 and R2, and it is assumed that reliability of a link between adjacent nodes within a same range is greater than the reliability threshold S0.

In the scenario in FIG. 19, the pilot vehicle A0 is first selected as a warning information broadcasting vehicle, then the pilot vehicle A0 is set as a start point, B0 and B1 that may perform direct inter-vehicle communication with the start point are removed from a set of out-of-platoon vehicles {B0, B1, B2, B3, B4, B5, B6} of out-of-platoon vehicle, and the set of out-of-platoon vehicles becomes {B2, B3, B4, B5, B6}. Then, a set of member vehicles A that may perform direct inter-vehicle communication with the start point is {A1, A2}, and a member vehicle A that is after the start point and that is furthest from the start point is the following vehicle A2. In the set of out-of-platoon vehicles {B2, B3, B4, B5, B6}, out-of-platoon vehicles located between the following vehicle A2 and the pilot vehicle A0 in a platoon advancing direction are B2 and B3. Herein, if an out-of-platoon vehicle is located in a range between a head of the pilot vehicle A0 and a tail of the following vehicle A2, it is determined that the out-of-platoon vehicle is located between the pilot vehicle A0 and the following vehicle A2. Certainly, another determining method may alternatively be used. For example, when a part of an out-of-platoon vehicle is located in a range between a head of the pilot vehicle A0 and a tail of the following vehicle A2, it is determined that the out-of-platoon vehicle is located between the pilot vehicle A0 and the following vehicle A2.

Then, because the following vehicle A2 may perform direct inter-vehicle communication with the out-of-platoon vehicles B2 and B3, the following vehicle A2 is selected as a warning information broadcasting vehicle, and B2, B3, and B4 that may perform direct inter-vehicle communication with the following vehicle A2 are removed from the set of out-of-platoon vehicles {B2, B3, B4, B5, B6}, so that the set of out-of-platoon vehicles becomes {B5, B6}.

Then, the following vehicle A2 is set as a start point, a set of member vehicles that may perform direct inter-vehicle communication with the start point is {A1, A3, A4}, and a member vehicle A that is after the start point and that is furthest from the start point is the following vehicle A4. In the set of out-of-platoon vehicles {B5, B6}, an out-of-platoon vehicle located between the following vehicle A4 and the following vehicle A2 that serves as a start point does not exist in the platoon advancing direction. In this case, the following vehicle A4 is selected as a warning information broadcasting vehicle, and B5 and B6 that may perform direct inter-vehicle communication with the following vehicle A4 is removed from the set of out-of-platoon vehicles {B5, B6}, so that the set of out-of-platoon vehicles becomes an empty set.

After the foregoing processing, member vehicles that broadcast the warning information Ma are finally selected as the pilot vehicle A0 and the following vehicles A2 and A4. Therefore, not all member vehicles A need to broadcast the warning information Ma, and the out-of-platoon vehicles B0 to B6 associated with the platoon can also reliably receive the warning information Ma.

### 1.3.4. Variant example of Embodiment 3

In Embodiment 3, in a flowchart of performing control processing on a following vehicle in FIG. 17, determining in step S533 ends when an intermediate vehicle that meets a specified condition is selected. This embodiment of this application is not limited thereto. From a viewpoint of selecting an optimal sending path, whether all intermediate vehicles meet the specified condition may alternatively be determined.

When a plurality of intermediate vehicles meet the specified condition, an intermediate vehicle with a maximum value of S 1 * S2 is selected as a relay vehicle, and driving control information Mc is sent to a target vehicle by using the relay vehicle. Alternatively, two different relay vehicles may be selected to generate two different paths, to send the driving control information Mc to the target vehicle. Therefore, information transmission reliability can be better ensured.

In addition, in Embodiment 3, a sending path (a communication path) determined (planned) by a communication path planning unit 420 is used by a pilot vehicle A0 to send the driving control information Mc to the target vehicle. However, this embodiment of this application is not limited thereto. In addition, a planned preferred path may be further notified to following vehicles A1 to A4, to indicate the following vehicles A1 to A4 to report local topology information through the path. In this case, when there is no indication of a reporting path from the pilot vehicle A0, the following vehicles A1 to A4 each select a reporting path, and when there is an indication of the reporting path, the local topology information is reported based on an indicated path.

Further, in Embodiment 3, when the pilot vehicle A0 cannot directly send the driving control information Mc to the following vehicle, a relay node that meets the condition is selected for sending, and when there is no relay node that meets the condition, sending of the driving control information Mc to the following vehicle is given up. However, this embodiment of this application is not limited thereto. For example, at least two relay nodes may be selected based on a requirement, to send the driving control information Mc to the following vehicle.

### 1.4. Variant example of Implementation 1

In the foregoing embodiments, that a pilot vehicle A0 is an automated driving vehicle that performs autonomous driving is used as an example for description, but the pilot vehicle A0 may alternatively be a manually-driven vehicle provided with an ADAS system. In this case, for example, a vehicle control apparatus 400 may provide driving assistance to a driver by displaying prompt information, or the like on a display apparatus of the vehicle, to assist the driver in better grasping a surrounding condition of a platoon, and ensure smooth driving of the platoon.

In addition, in the foregoing embodiments, all member vehicles A have a same structure (store a same program). The vehicle control apparatus 400 chooses to activate (operate) or deactivate a corresponding functional unit based on whether a current vehicle is the pilot vehicle A0 or one of following vehicles A1 to A4. However, this embodiment of this application is not limited thereto. A manner in which the pilot vehicle A0 and the following vehicles A1 to A4 have different structures may alternatively be used. In this case, the vehicle control apparatus 400 of the pilot vehicle A0 includes a unit 402 of obtaining local environment information of a current vehicle, a unit 404 of obtaining local environment information of another vehicle, a global environment information generation module 406, a pilot behavior formulation unit 408, an independent behavior formulation unit 409, a control execution module 414, a driving control information generation module 416, a warning information generation module 418, a communication path planning unit 420, and a warning scheme formulation unit 422. The following vehicles A1 to A4 each include a unit 402 of obtaining local environment information of a current vehicle, a front vehicle behavior recognition module 410, a following behavior formulation unit 412, and a control execution module 414.

In addition, in the foregoing embodiments, a scenario in which a platooning driving system 10 in which a plurality of member vehicles A perform platooning driving drives on an expressway is used as an example for description. However, this embodiment of this application is not limited thereto. The platooning driving system 10 in this application may also be applied to a scenario of driving on an ordinary road, a wharf, or the like. In this case, when local topology information and global topology information are generated, in addition to information about an out-of-platoon vehicle B, an object such as a pedestrian or a non-motor vehicle that may affect driving of the platoon may be recognized.

In addition, in the foregoing embodiments, the pilot vehicle A0 that drives at a foremost location in the platoon serves as a main control vehicle, and in the vehicle control apparatus 400 of the pilot vehicle A0, the unit 404 of obtaining local environment information of another vehicle, the global environment information generation module 406, the pilot behavior formulation unit 408, the independent behavior formulation unit 409, the driving control information generation module 416, the warning information generation module 418, the communication path planning unit 420, and the warning scheme formulation unit 422 function, so that the vehicle control apparatus 400 of the pilot vehicle A0 functions as a main control apparatus of the platooning driving system. However, this embodiment of this application is not limited thereto. For example, a vehicle that drives in the middle of the platoon may alternatively be used as a main control vehicle. Specifically, processing performed by the unit 404 of obtaining local environment information of another vehicle, the global environment information generation module 406, the pilot behavior formulation unit 408, the independent behavior formulation unit 409, the driving control information generation module 416, the warning information generation module 418, the communication path planning unit 420, and the warning scheme formulation unit 422 that enable the vehicle control apparatus 400 to function as the main control apparatus may also be performed by a vehicle control apparatus 400 of a following vehicle.

In addition, a global environment information generation module 406, a pilot behavior formulation unit 408, an independent behavior formulation unit 409, a driving control information generation module 416, a warning information generation module 418, and a warning scheme formulation unit 422 may form a vehicle control apparatus in a server. In this case, it can be understood that each member vehicle reports, to the server, local environment information generated by the member vehicle, and the server generates global environment information based on the local environment information.

### 1.5. Summary of Implementation 1

From Embodiment 1 to Embodiment 3 and the foregoing variant examples, at least the following manners may be obtained:
The platooning driving system 10 in Implementation 1 includes the plurality of member vehicles A0 to A4 that form the platoon. In addition, the platooning driving system 10 includes the vehicle control apparatus 400 that is disposed on the pilot vehicle A0 and that serves as the main control apparatus, and the vehicle control apparatus 400 includes the local environment information obtaining module 440, the global environment information generation module 406, and the decision making module 450. The local environment information obtaining module 440 is configured to obtain the local environment information indicating the driving environment of each of the plurality of member vehicles. The global environment information generation module 406 is configured to generate, based on the local environment information, the global environment information indicating the driving environment of the platoon. The decision making module 450 is configured to make the control decision about the platoon based on the global environment information.

An object about which a control decision is made may be the pilot vehicle A0 or one of the following vehicles A1 to A4. In addition, the "control decision" made by the decision making module 450 not only includes the decision about the motion behavior such as acceleration, braking, and a lane change, but also includes a processing decision such as sending the driving control information Mc or the warning information Ma. In addition, a decision about a behavior such as honking a horn may be imagined. In addition, in a specific example of the decision making module 450, the pilot behavior formulation unit 408, the independent behavior formulation unit 409, the communication path planning unit 420, and the warning scheme formulation unit 422 are described in the foregoing implementation.

In addition, as described in the foregoing variant examples, the main control apparatus may be disposed on the pilot vehicle A0, may be disposed on one of the following vehicles A1 to A4, or may be disposed on a server or a drone that can communicate with a member vehicle.

By using the platooning driving system 10 having the foregoing structure, a decision about a member vehicle A is made based on the global environment information indicating the overall driving environment of the platoon including all the member vehicles A0 to A4. Therefore, determining is performed in consideration of the driving environment of the platoon, to make a decision that seems to be more proper from an overall perspective of the platoon. For example, a case in which a rear vehicle cannot perform following driving and is separated from the platoon may be reduced, or impact exerted by a behavior of the platoon on an out-of-platoon vehicle may be suppressed, to further improve driving safety.

In addition, in the platooning driving system 10, the global environment information includes a location of the member vehicle A and a location of an out-of-platoon vehicle B around the platoon, or location information and speed information.

By using the foregoing structure, impact of an out-of-platoon vehicle on the behavior of the platoon or impact of a behavior of a member vehicle on an out-of-platoon vehicle may be accurately determined based on the foregoing information, to make a decision that seems to be more proper from an overall perspective of the platoon. In addition, a next location or behavior of the vehicle may be predicted based on the speed information, to make a more proper control decision.

In addition, in the platooning driving system 10 in Embodiment 1 to Embodiment 3, the plurality of member vehicles include a main control vehicle (for example, the pilot vehicle A0) provided with the main control apparatus and other member vehicles (for example, the following vehicles A1 to A4). The main control apparatus (for example, the vehicle control apparatus 400 of the pilot vehicle A0) obtains first local environment information indicating a driving environment of the main control vehicle that serves as a current vehicle (for example, the local environmental information that indicates the driving environment of the pilot vehicle A0 and that is generated in the pilot vehicle A0). A vehicle control apparatus of another member vehicle (for example, the vehicle control apparatus 400 of each of the following vehicles A1 to A4) obtains second local environment information indicating a driving environment of the another member vehicle that serves as a current vehicle (for example, local environment information that indicates the driving environment around each of the following vehicles A1 to A4 and that is generated in each of the following vehicles A1 to A4), and sends the second local environment information to the main control apparatus. A global environment information generation module of the main control apparatus generates global environment information based on the first local environment information and the second local environment information.

By using the foregoing structure, each member vehicle obtains local environment information indicating a driving environment of the member vehicle; another member vehicle sends, to the main control vehicle, local environment information generated by the member vehicle; the main control vehicle generates global environment information based on local environment information of the main control vehicle and the local environment information of the another member vehicle; and the main control vehicle makdes a control decision based on the global environment information. For example, compared with a case in which the main control vehicle makes a decision based on only driving environment information of the main control vehicle, in this implementation, a decision that seems to be more proper from an overall perspective of the platoon can be made, and driving safety and stability of the platoon can be improved.

In Embodiment 1 to Embodiment 3, the main control vehicle is the pilot vehicle A0 that drives at a foremost location, and the another member vehicle is one of the following vehicles A1 to A4 that drive after the pilot vehicle A0.

By using such a structure, the pilot vehicle at a foremost location in the platoon makes a control decision about the platoon, and a decision making vehicle coincides with the pilot vehicle, so that the platoon can be immediately guided to execute the decision.

In addition, in Embodiment 1 to Embodiment 3, the local environment information includes at least location information of a member vehicle and location information of another vehicle located outside the platoon (out-of-platoon vehicle); and the global environment information generation module generates the global environment information by collecting location information in all local environment information obtained by the local environment information obtaining module. In addition to the location information, in Embodiment 1 to Embodiment 3, the local environment information further includes vehicle speed information.

In addition, in Embodiment 1 to Embodiment 3, the decision making module 450 includes the pilot behavior formulation unit 408, and the pilot behavior formulation unit 408 formulates, based on the global environment information, a motion behavior of the pilot vehicle A0 that drives at a foremost location in the plurality of member vehicles. In this case, the main control apparatus may notify the formulated motion behavior of the pilot vehicle A0 to the following vehicles A1 to A4 that drive after the pilot vehicle in the plurality of member vehicles.

By using the foregoing structure, the behavior of the pilot vehicle A0 is formulated based on the global environment information, especially information indicating a driving environment of the following vehicle in the global environment information, to suppress occurrence of a case in which the following vehicle cannot perform following driving and is separated from the platoon. In addition, the formulated behavior of the pilot vehicle A0 is notified to the following vehicles A1 to A4, and the following vehicles A1 to A4 can drive smoothly after the pilot vehicle A0 in a case of learning of the behavior of the pilot vehicle A0, to ensure smooth platooning driving.

In addition, in Embodiment 2, the decision making module 450 includes the independent behavior formulation unit 409, the independent behavior formulation unit 409 formulates, based on the global environment information, an independent behavior of the following vehicle, and the independent behavior is different from a behavior of driving after the pilot vehicle A0.

By using the foregoing structure, the independent behavior that is of the following vehicle and that is different from a following behavior is determined based on the global environment information, to cope with different road conditions, and improve platooning driving flexibility.

In Embodiment 2, when the pilot behavior formulation unit 408 determines that the pilot vehicle A0 cannot change a lane, the independent behavior formulation unit 409 may enable a following vehicle to execute any one of the following independent behaviors:
① A last following vehicle in the following vehicles A1 to A4 changes a lane.
② A following vehicle closest to the pilot vehicle A0 in the following vehicles A1 to A4 changes a lane.
③ All the following vehicles A1 to A4 simultaneously change a lane.

In a manner of ①, for example, when the entire platoon needs to change a lane, but the pilot vehicle A0 cannot change a lane temporarily, the last following vehicle in the following vehicles A1 to A4 may change a lane to occupy a lane, so as to prepare for a lane change of the entire platoon. In a manner of ②, the following vehicle closest to the pilot vehicle A0 guides a rear following vehicle to change a lane. Compared with a case in which the pilot vehicle A0 changes a lane after a road condition permits, to guide the platoon to change a lane, in the manner, a case in which the road condition changes in a waiting period and the rear following vehicle cannot change a lane can be avoided. In a manner of □, all the following vehicles A1 to A4 simultaneously change a lane, to shorten a time period required for a lane change of the platoon.

In Embodiment 2, the main control apparatus includes the vehicle control apparatus 400 disposed on the pilot vehicle A0 and includes the driving control information generation module 416, the driving control information generation module 416 generates, based on the independent behavior formulated by the independent behavior formulation unit 409, driving control information that is used to indicate a following vehicle to execute an independent behavior, and the vehicle control apparatus 400 that is of the pilot vehicle A0 and that serves as the main control apparatus sends the driving control information to the following vehicle by using the communications unit 300 of the pilot vehicle A0.

In addition, in Embodiment 2, the decision making module 450 includes a warning scheme formulation unit 422, and the warning scheme formulation unit 422 selects a vehicle (a sending node) that is to send warning information to the out-of-platoon vehicle in any one of the following manners:
① All the member vehicles A send the warning information Ma.
② The pilot vehicle A0 driving at a foremost location in the plurality of member vehicles A sends the warning information Ma, and a following vehicle whose vehicle sequence number can be exactly divided by N sends the warning information, where a number of the pilot vehicle is 0, a plurality of following vehicles A1 to A4 that drive after the pilot vehicle are sequentially numbered by using natural numbers, and N ≥ 2.
③ The pilot vehicle A0 sends the warning information Ma, and in the plurality of following vehicles A1 to A4, following vehicles whose distances from the pilot vehicle A0 increase by a specified value send the warning information Ma.
④ The pilot vehicle A0 sends the warning information Ma, each following vehicle in the platoon generates a random value, a random value range is [0, 1], one threshold is determined, and the random value is compared with the threshold, so that a following vehicle whose random value is greater than the threshold sends the warning information Ma.

In the manner of ①, it can be effectively ensured that a surrounding out-of-platoon vehicle receives the warning information Ma, to improve driving safety. In the manners of ② to ④, signal interference can be suppressed when as many out-of-platoon vehicle as possible receive the warning information Ma.

In addition, in Embodiment 3, the decision making module 450 includes the warning scheme formulation unit 422, the warning scheme formulation unit 422 selects, from the plurality of member vehicles A based on the global environment information, a sending node that is to send the warning information Ma to the out-of-platoon vehicle B, and the warning information Ma is used to provide the situation of the platoon to the out-of-platoon vehicle B, to give a safety warning to the out-of-platoon vehicle B.

By using the foregoing structure, a member vehicle that is to send the warning information Ma is selected based on the global environment information. Therefore, for example, when it is determined, based on location information of the out-of-platoon vehicle B, that the out-of-platoon vehicle B may receive information sent by a plurality of member vehicles A, not all the member vehicles A need to send the warning information Ma, but only some member vehicles need to send the warning information Ma, so that a communication burden of the platoon can be reduced, and a burden imposed on processing of the out-of-platoon vehicle when the out-of-platoon vehicle frequently receives the warning information can be suppressed.

In addition, in Embodiment 3, the generated global environment information includes communication link status information (recorded as first communication link status information) indicating a status of a direct inter-vehicle communication link between the member vehicle A and the out-of-platoon vehicle B. The warning scheme formulation unit 422 selects, from the plurality of member vehicles A based on the first communication link status information, a vehicle (a sending node) that is to send the warning information Ma to the out-of-platoon vehicle B.

By using the foregoing structure, a member vehicle A that is to send the warning information Ma is selected based on the information about a status of a communication link between the member vehicle A and the out-of-platoon vehicle B, to reduce the communication burden as described above. In addition, a communication link status is considered, and it can be reliably ensured that the out-of-platoon vehicle receives the warning information Ma.

In Embodiment 3, the warning scheme formulation unit 422 selects, as a first selected sending node, the pilot vehicle A0 that drives at a foremost location in the plurality of member vehicles, and sequentially selects another sending node from the following vehicles A1 to A4. During selection of the another sending node, the another sending node is selected based on a condition that the another sending node can perform direct inter-vehicle communication with a previously selected sending node and that the warning information sent by the another sending node can cover all out-of-platoon vehicles between the another sending node and the previously selected sending node.

Based on a case (of whether all out-of-platoon vehicles are covered), one or more other sending nodes may be selected.

By using the foregoing structure, the vehicle that is to send the warning information Ma can be quickly and effectively selected, and a proper publishing node can be selected to cover all the out-of-platoon vehicles.

In addition, during selection of the another sending node, a following vehicle that is far from the previously selected sending node may be preferentially selected. For example, determining may start from a following vehicle that is far from the previously selected sending node, and after it is determined that the following vehicle can be used as a sending node, the following vehicle is selected as a sending node, and another node is not selected.

By using the foregoing structure, determining starts from the following vehicle that is far from the previously selected sending node, in other words, starts determining from a following vehicle with a high probability that more out-of-platoon vehicles are covered, so that a calculation burden can be reduced, and the sending node of the warning information Ma is quickly selected.

In addition, in Embodiment 3, the generated global environment information includes communication link status information (recorded as second communication link status information) indicating a status of a direct communication link between the plurality of member vehicles. The decision making module 450 includes the communication path planning unit 420, and the communication path planning unit 420 plans, based on the second communication link status information, an inter-vehicle communication path through which the plurality of member vehicles perform inter-vehicle communication.

By using the foregoing structure, the inter-vehicle communication path through which the member vehicles perform inter-vehicle communication is planned based on the second communication link status information. Therefore, communication can be performed through a reliable communication path, information transmission reliability and stability can be ensured, and platooning driving reliability and stability can be improved.

In addition, in a specific communication path planning method, the communication path planning unit 420 determines, based on the second communication link status information, whether any two of the plurality of member vehicles can perform direct inter-vehicle communication, and when determining that two member vehicles cannot perform direct inter-vehicle communication, the communication path planning unit 420 selects a relay node from a member vehicle located between the two member vehicles, to plan the inter-vehicle communication path.

By using the foregoing structure, when direct communication cannot be performed or direct communication is not reliable, the relay node is selected to perform relaying, so that information is reliably transmitted, and platooning driving reliability and stability are improved.

During selection of the relay node, the communication path planning unit 420 may start determining from a member vehicle located in the middle of two member vehicles.

By using the foregoing structure, determining starts from a node with a high probability of serving as the relay node, so that a proper relay node can be quickly selected, to reduce a calculation burden.

In addition, when the two member vehicles are the pilot vehicle A0 that drives at a foremost location and one following vehicle driving after the pilot vehicle A0, and two following vehicles are located in the middle of the pilot vehicle A0 and one following vehicle, determining starts from one following vehicle in the two following vehicles that is closer to the pilot vehicle A0.

By using the foregoing structure, determining starts from one vehicle closer to the pilot vehicle A0 in the two vehicles in the middle, to preferentially use the vehicle as a relay node when the vehicle meets a condition, so that the relay node more reliably receives the driving control information Mc, or the like from the pilot vehicle A0, to implement reliable relay sending.

In addition, in Embodiment 3, the main control apparatus includes the vehicle control apparatus 400 disposed on the pilot vehicle A0, and the decision making module 450 includes the independent behavior formulation unit 409. The independent behavior formulation unit 409 formulates the independent behavior of the following vehicle based on the global environment information, and the independent behavior is different from a behavior of driving after the pilot vehicle. The driving control information generation module 416 of the vehicle control apparatus generates, based on the independent behavior formulated by the independent behavior formulation unit 409, the driving control information Mc that is used to indicate the following vehicle to execute the independent behavior. The vehicle control apparatus 400 that is of the pilot vehicle and that serves as the main control apparatus sends the driving control information Me through the inter-vehicle communication path that is between the pilot vehicle and the following vehicle and that is planned by the communication path planning unit 420.

By using the foregoing structure, the driving control information Mc can be reliably sent to the following vehicle, to improve platoon control reliability and stability.

### 2. Implementation 2

Implementation 2 of this application relates to a vehicle control apparatus. The vehicle control apparatus functions as a main control apparatus for controlling a platoon, and has a same structure and function as the vehicle control apparatus 400 of the pilot vehicle A0 in Implementation 1. Therefore, in Implementation 2, the vehicle control apparatus in this implementation is briefly described by using accompanying drawings in Implementation 1 and reference numerals in Implementation 1. In addition, for more specific content, refer to Implementation 1.

A vehicle control apparatus 400 in this implementation serves as a main control apparatus, and is configured to control a platoon including a plurality of member vehicles A. The plurality of member vehicles A include a pilot vehicle A0 that drives at a foremost location and following vehicles A1 to A4 that drive after the pilot vehicle A0. The vehicle control apparatus 400 includes a local environment information obtaining module 440, configured to obtain local environment information indicating a driving environments of each of the plurality of member vehicles; a global environment information generation module 406, configured to generate, based on the obtained local environment information, global environment information indicating a driving environment of the platoon; and a decision making module 450, configured to make a control decision about the platoon based on the global environment information.

The "control decision" made by the decision making module 450 not only includes a decision about a motion behavior such as acceleration, braking, or a lane change, but also includes a processing decision such as sending driving control information Mc or warning information Ma. In addition, a decision about a behavior such as honking a horn may be imagined.

In addition, the global environment information may include a location of a member vehicle and a location of an out-of-platoon vehicle around the platoon, or location information and speed information.

The vehicle control apparatus 400 in this implementation serves as a main control apparatus, and may be disposed on a member vehicle A, for example, the pilot vehicle A0 or one of the following vehicles A1 to A4. In addition, in another embodiment, the vehicle control apparatus 400 may not be disposed on the member vehicle A, for example, may be disposed on a server that can communicate with the member vehicle A, or may be disposed on a drone that advancing after the platoon.

When the vehicle control apparatus 400 serves as a main control apparatus and is disposed on a member vehicle i, and the member vehicle i is any one of the plurality of member vehicles, the local environment information obtaining module 440 includes a unit 402 of obtaining local environment information of a current vehicle and a unit 404 of obtaining local environment information of another vehicle; the unit 402 of obtaining local environment information of a current vehicle is configured to obtain local environment information indicating a driving environment of the member vehicle i; and the unit 404 of obtaining local environment information of another vehicle is configured to obtain, from another member vehicle different from the member vehicle i by using a communications unit of the member vehicle i, local environment information indicating a driving environment of the another member vehicle.

When the vehicle control apparatus 400 is disposed on the server or the drone, the vehicle control apparatus 400 includes the foregoing global environment information generation module 406 and a pilot behavior formulation unit 408 (a decision making module 450). In this case, in addition to local environment information that indicates a driving environment around the member vehicle A and that is obtained by the server or the drone from each member vehicle A, basic information for generating the global environment information may be information detected by a sensing unit such as a camera or radar of the drone, or may be information obtained, in a manner in which a communications unit receives a broadcast, or the like, from an out-of-platoon vehicle B driving around the platoon, or may be information obtained by the server by using a camera, radar, or the like disposed on both sides of the road.

Local environment information generated by a member vehicle includes location information of the member vehicle and location information of another vehicle located outside the platoon. The global environment information generation module 406 generates the global environment information by collecting location information in all local environment information obtained by the local environment information obtaining module 440. In addition, vehicle speed information may be included in addition to location information.

In an example of the decision making module 450 in this implementation, the decision making module 450 may include the piloting behavior formulation unit 408, and the piloting behavior formulation unit 408 formulates a motion behavior such as acceleration, braking, a lane change, or current situation maintainance of the pilot vehicle A0 based on the global environment information. In this case, the vehicle control apparatus 400 may notify the following vehicles A1 to A4 of the formulated motion behavior of the pilot vehicle A0.

In addition, in another example of the decision making module 450, the decision making module 450 may further include an independent behavior formulation unit 409. The independent behavior formulation unit 409 formulates independent behaviors of one or some following vehicles A1 to A4 based on the global environment information. The independent behavior is different from a behavior of driving after the pilot vehicle A0.

In this case, when the pilot behavior formulation unit 408 determines that the pilot vehicle A0 cannot change a lane, the independent behavior formulation unit 409 may formulate any one of the following independent behaviors:
① A last following vehicle in the following vehicle A1 to A4 changes a lane.
② A following vehicle closest to the pilot vehicle A0 in the following vehicles A1 to A4 changes a lane.
③ All the following vehicles A1 to A4 simultaneously change a lane.

In addition, when the vehicle control apparatus 400 is disposed on the pilot vehicle A0, the vehicle control apparatus 400 may further include a driving control information generation module 416. The driving control information generation module 416 generates, based on the independent behavior formulated by the independent behavior formulation unit 409, the driving control information Mc that is used to indicate a corresponding vehicle in the following vehicles A1 to A4 to execute the independent behavior. The vehicle control apparatus 400 sends the driving control information Mc to a corresponding target member vehicle by using a communications unit 300 of the pilot vehicle A0.

In addition, in another example of the decision making module 450, the decision making module 450 may further include a warning scheme formulation unit 422. The warning scheme formulation unit 422 selects at least one member vehicle from the plurality of member vehicles A as a sending node that is to send the warning information Ma to the out-of-platoon vehicle B. The warning information Ma is used to provide a situation of the platoon to the out-of-platoon vehicle B, to give a safety warning to the out-of-platoon vehicle B.

For example, broadcasting may be used as a sending manner of the warning information Ma.

In this implementation, the warning scheme formulation unit 422 may select, in any one of the following manners, the member vehicle A that is to send the warning information Ma to the out-of-platoon vehicle B:
< All the member vehicles A send the warning information Ma.
□ The pilot vehicle A0 sends the warning information Ma, and a following vehicle whose vehicle sequence number can be exactly divided by N, where a number of the pilot vehicle A0 is 0, the following vehicles A1 to A4 after the pilot vehicle A0 are sequentially numbered by using natural numbers, and N ≥ 2.
□ The pilot vehicle A0 sends the warning information Ma, and in a plurality of following vehicles A1 to A4, following vehicles whose distances from the pilot vehicle increase by a specified value send the warning information Ma.
□ The pilot vehicle A0 sends the warning information Ma, each member vehicle generates a random value, a random value range is [0, 1], one threshold is determined, and the random value is compared with the threshold, so that a following vehicle whose random value is greater than the threshold sends the warning information Ma.

In addition, in an embodiment different from the foregoing manners of ① to ④, the local environment information includes first communication link status information indicating a status of a direct communication link between a member vehicle and another vehicle; the global environment information generation module 406 generates the global environment information by collecting first communication link status information in all local environment information obtained by the local environment information obtaining module 440; and the warning scheme formulation unit 422 selects at least one member vehicle from the plurality of member vehicles A as a sending node (a vehicle that is to send the warning information Ma) based on the global environment information.

Because the warning scheme formulation unit 422 selects, from the plurality of member vehicles A based on the first communication link status information, the vehicle that is to send the warning information Ma to the out-of-platoon vehicle B, the warning information Ma can be reliably sent to the out-of-platoon vehicle B. In addition, sometimes, some member vehicles A send the warning information Ma, to completely cover all out-of-platoon vehicles B, and not all member vehicles A need to send the warning information Ma, to suppress a problem such as signal interference.

In an example, the warning scheme formulation unit 422 may select the pilot vehicle A0 as one sending node to send the warning information Ma, and select, from the following vehicles A1 to A4, a vehicle as another sending node to send the warning information Ma. A selection manner may be as follows: A first another sending node is selected based on a condition that the first another sending node can perform direct inter-vehicle communication with the pilot vehicle A0 and that the warning information Ma sent by the first another sending node can cover all out-of-platoon vehicles B between the first another sending node and the pilot vehicle. Then, a second another sending node is selected based on a case (of whether all out-of-platoon vehicles are covered). A selection manner is as follows: The second another sending node is selected, from a following vehicle located after the first sending node, based on a condition that the second another sending node can perform direct inter-vehicle communication with the first sending node and that the warning information Ma sent by the second another sending node can cover all out-of-platoon vehicles B between the second another sending node and the first sending node. Then, a third sending node, a fourth sending node, ..., and another sending node may be selected in a same manner based on a case.

The foregoing manner may be summarized as follows: The warning scheme formulation unit 422 uses, as a first selected sending node, the pilot vehicle A0 driving at a foremost location in the platoon, and performs selection processing of another node, where during selection processing of the another node, the another node is selected, from the following vehicles A1 to A4 that drive after the pilot vehicle in the platoon, based on a condition that the another node can perform direct inter-vehicle communication with a previously selected sending node and that the warning information Ma sent by the another node can cover all other vehicles between the another node and the previously selected sending node.

In addition, during selection processing of the another node, a following vehicle that is far from the previously selected sending node is preferentially selected. For example, during selection of the first another sending node, if a plurality of following vehicles can perform direct communication with the pilot vehicle A0, it is first determined whether one following vehicle far from the pilot vehicle A0 meets a condition that all out-of-platoon vehicles between the vehicle and the pilot vehicle A0 can be covered.

In addition, in this implementation, optionally, the local environment information obtained by the local environment information obtaining module 440 includes second communication link status information indicating a status of a direct communication link between a member vehicle and another member vehicle; the global environment information generation module 406 generates the global environment information by collecting second communication link status information in all local environment information obtained by the local environment information obtaining module 440; and the decision making module 450 includes a communication path planning unit 420, the communication path planning unit 420 plans an inter-vehicle communication path based on the second communication link status information in the global environment information, and the inter-vehicle communication path is used by the plurality of member vehicles (for example, the pilot vehicle A0 and any following vehicle) to perform inter-vehicle communication.

Because the communication path planning unit 420 plans, based on the second communication link status information, an inter-vehicle communication path for inter-vehicle communication between the plurality of member vehicles, a reliable communication path can be planned, accurate information transmission can be ensured, and platooning stability can be improved.

In a specific solution, the communication path planning unit 420 may determine, based on the second communication link status information, whether any two member vehicles A (for example, the pilot vehicle A0 and a following vehicle that serves as a communication target, namely, a target vehicle) can perform direct inter-vehicle communication. When determining that two member vehicles A cannot perform direct inter-vehicle communication, the communication path planning unit 420 performs relay node selection processing of selecting a relay node from a member vehicle located between the two member vehicles, to plan an inter-vehicle communication path.

In addition, during selection processing of the relay node, optionally, the communication path planning unit 420 may start determining from a member vehicle located in the middle of two member vehicles.

In this case, to plan a communication path between the pilot vehicle A0 and the target vehicle (any one of A1 to A4), when two following vehicles are located in the middle of the pilot vehicle A0 and the target vehicle, determining may start from one following vehicle in the two following vehicles that is closer to the pilot vehicle A0. In other words, the following vehicle closer to the pilot vehicle A0 is preferentially selected as the relay node.

In addition, in this implementation, when the vehicle control apparatus 400 is disposed on the pilot vehicle A0, the decision making module 450 may further include the independent behavior formulation unit 409, the independent behavior formulation unit 409 formulates an independent behavior of each of the following vehicles A1 to A4, and the independent behavior is different from the behavior of driving after the pilot vehicle A0. In addition, the vehicle control apparatus 400 may further include the driving control information generation module 416, and the driving control information generation module 416 generates, based on the independent behavior formulated by the independent behavior formulation unit 409, the driving control information Mc that is used to indicate the following vehicle to execute the independent behavior. The driving control information Mc is sent through the inter-vehicle communication path planned by the communication path planning unit 420.

In this implementation, the communication path planning unit 420 plans, based on the second communication link status information, a communication path for sending the driving control information Mc, so that delivery of the driving control information Mc can be reliably ensured and platoon control reliability is improved.

The vehicle control apparatus in this implementation makes a decision about the pilot vehicle A0 and/or the following vehicles A1 to A4 based on the global environment information. Therefore, determining is performed in consideration of a driving environment of the platoon, to make a decision that seems to be more proper from an overall perspective of the platoon. For example, a case in which a rear vehicle cannot perform following driving and is separated from the platoon may be reduced, or impact exerted by a behavior of the platoon on an out-of-platoon vehicle may be suppressed, to further improve driving safety.

### 3. Implementation 3: Vehicle control method

Implementation 3 of this application relates to a vehicle control method. The vehicle control method may be performed by the vehicle control apparatus 400 in Implementation 2. In addition, the vehicle control method includes same content as processing in a procedure described in Implementation 1. Therefore, a related processing step in Implementation 1 is properly cited for description in descriptions in this implementation.

The vehicle control method in this implementation is used to control a platoon including a plurality of member vehicles A. The plurality of member vehicles A include a pilot vehicle A0 that drives at a foremost location and following vehicles A1 to A4 that drive after the pilot vehicle. The vehicle control method includes the following steps: a local environment information obtaining step of obtaining local environment information indicating a driving environment of each of the plurality of member vehicles (for example, S300 and "obtaining local topology information of a following vehicle" in S500 in FIG. 8A); a global environment information generation step of generating, based on the local environment information, global environment information indicating an overall driving environment of the platoon including all the member vehicles (for example, "generating global topology information" in S500 in FIG. 8A); and a decision making step of making a control decision about the platoon based on the global environment information (for example, S510 in FIG. 8A, and S530 and S540 in FIG. 16C).

A "control decision" made by a decision making module 450 not only includes a decision about a motion behavior such as acceleration, braking, or a lane change, but also includes a processing decision such as sending driving control information Mc or warning information Ma. In addition, a decision about a behavior such as honking a horn may be imagined.

In addition, in an example of specific content included in the global environment information, the global environment information may include a location of a member vehicle A and a location of an out-of-platoon vehicle B around the platoon, or location information and speed information. For example, in S300 and S500 in FIG. 8A, local topology information including location information and speed information of a vehicle is obtained, and in S500 in FIG. 8A, global topology information including the location information and the speed information of the vehicle is generated. In addition, in addition to the location information and the speed (vehicle speed) information of the vehicle, the local environment information and the global environment information may further include pedestrian information, animal information, or static environment information (for example, obstacle information).

The vehicle control method in this implementation may be performed by any member vehicle A (the pilot vehicle A0 or any one of the following vehicles A1 to A4). In addition, in another embodiment, the vehicle control method may be performed by a server or a drone.

When the vehicle control method is performed by the member vehicle A (the pilot vehicle A0 or one of the following vehicles A1 to A4), the local environment information obtaining step may include the following steps: a step of obtaining local environment information of a current vehicle of obtaining current vehicle local environment information indicating a driving environment around the member vehicle A that serves as a current vehicle (for example, S300 in FIG. 8A); and a step of obtaining local environment information of another vehicle of obtaining local environment information of another vehicle by using a communications unit 300 of the member vehicle A that serves as the current vehicle (for example, "obtaining local topology information of a following vehicle" in S500 in FIG. 8A). The local environment information of another vehicle indicates a driving environment around another member vehicle different from the current vehicle. In the global environmental information generation step, the global environmental information is generated based on the local environmental information of a current vehicle and the local environmental information of another vehicle (for example, "generating global topology information" in S500 in FIG. 8A).

When the vehicle control method is performed by the server or the drone, the vehicle control method includes the global environment information generation step and a pilot behavior formulation step. In this case, for example, basic information for generating the global environment information may be local environment information that indicates a driving environment of the member vehicle A and that is obtained by the server or the drone from each member vehicle A, may be information detected by a sensing unit such as a camera or radar of the drone, may be information obtained, in a manner in which a communications unit receives a broadcast, or the like, from an out-of-platoon vehicle B driving around the platoon, or may be information obtained by the server by using a camera, radar, or the like disposed on both sides of a road.

Optionally, the decision making step includes the pilot behavior formulation step (for example, "formulating a behavior of the current vehicle, namely, the pilot vehicle" in S510 in FIG. 8A). In the pilot behavior formulation step, a motion behavior of the pilot vehicle A0 is formulated based on the global environment information. The vehicle control method may further include a step of notifying the formulated motion behavior of the pilot vehicle A0 to the following vehicles A1 to A4 (for example, "sending pilot vehicle behavior information to a following vehicle" in S510 in FIG. 8A).

Optionally, the decision making step further includes an independent behavior formulation step (for example, S530 in FIG. 13B and FIG. 16C). In the independent behavior formulation step, an independent behavior of each of the following vehicles A 1 to A4 is formulated. The independent behavior is different from a behavior of driving after the pilot vehicle A0.

In specific independent behavior formulation content, in the independent behavior formulation step, when the pilot vehicle A0 cannot change a lane, any one of the following independent behaviors may be formulated:
① A last following vehicle in the following vehicle A1 to A4 changes a lane.
② A following vehicle closest to the pilot vehicle A0 in the following vehicles A1 to A4 changes a lane.
③ All the following vehicles A1 to A4 simultaneously change a lane.

In addition, when the vehicle control method is performed by the vehicle control apparatus 400 disposed on the pilot vehicle A0, a driving control information generation step may be further included (for example, "generating driving control information" in S537 in FIG. 17). In the driving control information generation step, driving control information Mc that is used to indicate a following vehicle to execute an independent behavior is generated based on the independent behavior formulated in the independent behavior formulation step. The vehicle control method further includes a step of sending the driving control information Mc to the following vehicles A1 to A4 by using a communications unit 300 of the pilot vehicle A0 (for example, "sending the driving control information to a following vehicle" in S537 in FIG. 17).

In addition, in this implementation, in another example of the decision making step, the decision making step further includes a warning scheme formulation step (for example, S540 in FIG. 13B and FIG. 16C). In the warning scheme formulation step, a vehicle that is to send the warning information Ma to the out-of-platoon vehicle B is selected from the plurality of member vehicles A. The warning information Ma is used to provide a situation of the platoon to the out-of-platoon vehicle B, to give a safety warning to the out-of-platoon vehicle.

In a specific warning scheme formulation scheme, in the warning scheme formulation step, the vehicle (a sending node) that is to send the warning information Ma to the out-of-platoon vehicle B may be selected in any one of the following manners:
① All the member vehicles A send the warning information Ma.
② The pilot vehicle A0 sends the warning information Ma, and a following vehicle whose vehicle sequence number can be exactly divided by N sends the warning information Ma, where a number of the pilot vehicle A0 is 0, the following vehicles A1 to A4 after the pilot vehicle A0 are sequentially numbered by using natural numbers, and N ≥ 2.
③ The pilot vehicle A0 sends the warning information Ma, and in the plurality of following vehicles A1 to A4, following vehicles whose distances from the pilot vehicle A0 increase by a specified value send the warning information Ma.
④ The pilot vehicle A0 sends the warning information Ma, each following vehicle in the platoon generates a random value, a random value range is [0, 1], one threshold is determined, and the random value is compared with the threshold, so that a following vehicle whose random value is greater than the threshold sends the warning information Ma.

In this implementation, optionally, the global environment information includes first communication link status information, and the first communication link status information indicates a status of a direct communication link between a member vehicle A and an out-of-platoon vehicle B. In the warning scheme formulation step, the vehicle that is to send the warning information Ma to the out-of-platoon vehicle B is selected from the plurality of member vehicles Abased on the first communication link status information (for example, S540).

Optionally, in the warning scheme formulation step, the pilot vehicle A0 is selected to send the warning information Ma, and the vehicle that serves as a sending node that is to send the warning information Ma is selected from the following vehicles A1 to A4. A selection manner may be as follows: A first another sending node is selected based on a condition that the first another sending node can perform direct inter-vehicle communication with the pilot vehicle A0 and that the warning information Ma sent by the first another sending node can cover all out-of-platoon vehicles B between the first another sending node and the pilot vehicle A0. Then, a second another sending node is selected based on a case (of whether all out-of-platoon vehicles around the platoon are covered). A selection manner is as follows: The second another sending node is selected, from a following vehicle located after the first sending node, based on a condition that the second another sending node can perform direct inter-vehicle communication with the first sending node and that the warning information Ma sent by the second another sending node can cover all out-of-platoon vehicles B between the second another sending node and the first sending node. Then, a third sending node, a fourth sending node, ..., and another sending node may be selected in a same manner based on a case.

The foregoing manner may be summarized as follows: The warning scheme formulation unit 422 selects the pilot vehicle A0 as a first selected sending node, and performs selection processing of another sending node. During selection processing of the another sending node, the another sending node is selected from the following vehicles A1 to A4 based on a condition that the another sending node can perform direct inter-vehicle communication with a previously selected sending node and that the warning information sent by the another sending node can cover all out-of-platoon vehicles B between the another sending node and the previously selected sending node.

In addition, to select the another sending node, determining may start from a following vehicle that is far from a previously selected sending node. In other words, a following vehicle that is far from a previously selected sending node is preferentially selected as the another sending node. For example, during selection of the first another sending node, if a plurality of following vehicles can perform direct communication with the pilot vehicle A0, it is first determined whether one following vehicle far from the pilot vehicle A0 meets a condition that all out-of-platoon vehicles between the vehicle and the pilot vehicle A0 can be covered.

In this implementation, optionally, the global environment information includes second communication link status information, and the second communication link status information indicates a status of a direct communication link between the plurality of member vehicles A. The decision making step includes a communication path planning step. In the communication path planning step, an inter-vehicle communication path through which the plurality of member vehicles (for example, the pilot vehicle A0 and any following vehicle) perform inter-vehicle communication is planned based on the second communication link status information (for example, S532 to S537 in FIG. 17).

Optionally, in the communication path planning step, whether any two member vehicles (for example, the pilot vehicle A0 and the following vehicle that serves a communication target, namely, a target vehicle) can perform direct inter-vehicle communication is determined based on the second communication link status information (for example, S532 in FIG. 17). When it is determined that two member vehicles cannot perform direct inter-vehicle communication ("No" in S532), a relay node is selected from a member vehicle located between the two member vehicles, to plan the inter-vehicle communication path (for example, S533 and S535 in FIG. 17).

In addition, during selection of the relay node, determining may start from the following vehicle located in the middle of the two member vehicles.

In this case, to plan a communication path between the pilot vehicle A0 and the target vehicle, when two following vehicles are located in the middle of the pilot vehicle A0 and the target vehicle, determining may start from one following vehicle in the two following vehicles that is closer to the pilot vehicle A0.

In addition, when the vehicle control method is performed by the vehicle control apparatus 400 disposed on the pilot vehicle A0, the decision making step may further include the independent behavior formulation step (for example, S530). In the independent behavior formulation step, an independent behavior of a following vehicle is formulated, and the independent behavior is different from a behavior of driving after the pilot vehicle A0. In this case, the vehicle control method may further include the driving control information generation step. In the driving control information generation step, the driving control information Mc that is used to indicate the following vehicle to execute the independent behavior is generated based on the independent behavior formulated in the independent behavior formulation step, and the driving control information Mc is sent through the inter-vehicle communication path.

In the vehicle control method in this implementation, a decision about the pilot vehicle A0 and/or the following vehicles A1 to A4 is made based on the global environment information. Therefore, determining is performed in consideration of a driving environment around the platoon, to make a decision that seems to be more proper from an overall perspective of the platoon. For example, a case in which a rear vehicle cannot perform following driving and is separated from the platoon may be reduced, or impact exerted by a behavior of the platoon on an out-of-platoon vehicle may be suppressed, to further improve driving safety.

### 4. Implementation 4: Vehicle

Implementation 4 of this application relates to a vehicle. The vehicle includes a vehicle control apparatus 400 in Implementation 2. The vehicle may further have a positioning unit 100, a sensing unit 200, and a communications unit 300, and may be an automated driving vehicle. The vehicle and another vehicle may form a platoon by using a communications unit 300, to perform platooning driving. During platooning driving, the vehicle functions as a main control vehicle, and the vehicle may be a pilot vehicle A0 driving at a foremost location in the platoon, or may be one of following vehicles A1 to A4 driving after the pilot vehicle A0.

The vehicle in this implementation makes a decision about the member vehicle based on the global environment information. Therefore, determining is performed in consideration of a driving environment of the platoon, to make a decision that seems to be more proper from an overall perspective of the platoon. For example, a case in which a rear vehicle cannot perform following driving and is separated from the platoon may be reduced, or impact exerted by a behavior of the platoon on an out-of-platoon vehicle may be suppressed, to further improve driving safety.

### 5. Implementation 5: Computer-readable storage medium

Implementation 5 of this application provides a computer-readable storage medium. The computer-readable storage medium stores a program that can be read by a computer, and the program is run, so that the computer can function as the vehicle control apparatus 400 in Implementation 2 or perform the vehicle control method in Implementation 3.

By using the computer-readable storage medium in this implementation, the computer can function as the vehicle control apparatus 400 in Implementation 2 or perform the vehicle control method in Implementation 3. In this case, a decision about the pilot vehicle A0 and/or the following vehicles A1 to A4 is made based on the global environment information. Therefore, determining is performed in consideration of a driving environment of the platoon, to make a decision that seems more proper from an overall perspective of the platoon. For example, a case in which a rear vehicle cannot perform following driving and is separated from the platoon may be reduced, or impact exerted by a behavior of the platoon on an out-of-platoon vehicle may be suppressed, to further improve driving safety.

### 6. Implementation 6: Computer program

Implementation 6 of this application provides a computer program. The program is run, so that the computer can function as the vehicle control apparatus 400 in Implementation 2 or perform the vehicle control method in Implementation 3.

By using the computer program in this implementation, the computer can function as the vehicle control apparatus 400 in Implementation 2 or perform the vehicle control method in Implementation 3. In this case, a decision about the pilot vehicle A0 and/or the following vehicles A1 to A4 is made based on the global environment information. Therefore, determining is performed in consideration of a driving environment of the platoon, to make a decision that seems more proper from an overall perspective of the platoon. For example, a case in which a rear vehicle cannot perform following driving and is separated from the platoon may be reduced, or impact exerted by a behavior of the platoon on an out-of-platoon vehicle may be suppressed, to further improve driving safety.

### 7. Implementation 7: Computing device

Implementation 7 of this application provides a computing device, the computing device typically has a processor, a memory, and an input/output apparatus, the memory stores a computer program, and the computer program is run by using the processor, so that the computing device can function as the vehicle control apparatus 400 in Implementation 2 or perform the vehicle control method in Implementation 3.

By using the computing device in this implementation, a decision about the pilot vehicle A0 and/or the following vehicles A1 to A4 is made based on the global environment information. Therefore, determining is performed in consideration of a driving environment of the platoon, to make a decision that seems to be more proper from an overall perspective of a platoon. For example, a case in which a rear vehicle cannot perform following driving and is separated from the platoon may be reduced, or impact exerted by a behavior of the platoon on an out-of-platoon vehicle may be suppressed, to further improve driving safety.

It should be noted that the foregoing is merely preferred embodiments of this application and an applied technical principle. A person skilled in the art understands that this application is not limited to the specific embodiments. A person skilled in the art can make various changes, re-adjustment, and replacement without departing from the scope of this application. Therefore, although this application is described in detail by using the foregoing embodiments, this application is not limited to the foregoing embodiments, and may further include more other equivalent embodiments without departing from a concept of this application, which all fall within the protection scope of this application.

## Claims

1. A vehicle control apparatus, configured to control a platoon comprising a plurality of member vehicles, and comprising a local environment information obtaining module, a global environment information generation module, and a decision making module, wherein
the local environment information obtaining module is configured to obtain local environment information indicating a driving environment of each of the plurality of member vehicles;
the global environment information generation module is configured to generate, based on the local environment information, global environment information indicating a driving environment of the platoon; and
the decision making module is configured to make a control decision about the platoon based on the global environment information.

2. The vehicle control apparatus according to claim 1, wherein
the vehicle control apparatus is disposed on a member vehicle i, and the member vehicle i is any one of the plurality of member vehicles;
the local environment information obtaining module comprises a unit of obtaining local environment information of a current vehicle and a unit of obtaining local environment information of another vehicle;
the unit of obtaining local environment information of a current vehicle is configured to obtain local environment information indicating a driving environment of the member vehicle i; and
the unit of obtaining local environment information of another vehicle is configured to obtain, from another member vehicle different from the member vehicle i by using a communications unit of the member vehicle i, local environment information indicating a driving environment of the another member vehicle.

3. The vehicle control apparatus according to claim 2, wherein the member vehicle i is a pilot vehicle that drives at a foremost location in the platoon.

4. The vehicle control apparatus according to any one of claims 1 to 3, wherein
the local environment information comprises at least location information of a member vehicle and location information of another vehicle located outside the platoon; and
the global environment information generation module generates the global environment information by collecting location information in all local environment information obtained by the local environment information obtaining module.

5. The vehicle control apparatus according to any one of claims 1 to 4, wherein
the decision making module comprises a pilot behavior formulation unit, and the pilot behavior formulation unit formulates, based on the global environment information, a motion behavior of the pilot vehicle that drives at the foremost location in the platoon.

6. The vehicle control apparatus according to any one of claims 1 to 5, wherein
the plurality of member vehicles comprise the pilot vehicle that drives at the foremost location in the platoon and a following vehicle driving after the pilot vehicle in the platoon; and
the decision making module comprises an independent behavior formulation unit, the independent behavior formulation unit formulates an independent behavior of the following vehicle based on the global environment information, and the independent behavior is different from a behavior of driving after the pilot vehicle.

7. The vehicle control apparatus according to claim 6, wherein
when the pilot vehicle cannot change a lane, the independent behavior formulation unit formulates any one of the following independent behaviors:
① a last following vehicle in the following vehicle changes a lane;
② a following vehicle closest to the pilot vehicle in the following vehicle changes a lane; and
③ all following vehicles simultaneously change a lane.

8. The vehicle control apparatus according to claim 6 or 7, wherein
the vehicle control apparatus is disposed on the pilot vehicle, and comprises a driving control information generation module, and the driving control information generation module generates, based on the independent behavior formulated by the independent behavior formulation unit, driving control information used to indicate the following vehicle to execute the independent behavior; and
the vehicle control apparatus sends the driving control information to the following vehicle by using a communications unit of the pilot vehicle.

9. The vehicle control apparatus according to any one of claims 1 to 8, wherein
the decision making module comprises a warning scheme formulation unit, the warning scheme formulation unit formulates, in any one of the following manners, a scheme for sending warning information to the another vehicle located outside the platoon, and the warning information is used to provide a situation of the platoon to the another vehicle:
① all of the plurality of member vehicles send the warning information;
② the pilot vehicle that drives at the foremost location in the platoon in the plurality of member vehicles sends the warning information, and a following vehicle whose vehicle sequence number can be exactly divided by N sends the warning information, wherein a number of the pilot vehicle is 0, a plurality of following vehicles that drive after the pilot vehicle in the platoon are sequentially numbered by using natural numbers, and N ≥ 2;
③ the pilot vehicle sends the warning information, and in a plurality of following vehicles, following vehicles whose distances from the pilot vehicle increase by a specified value send the warning information; and
④ the pilot vehicle sends the warning information, each following vehicle generates a random value, a random value range is [0, 1], one threshold is determined, and the random value is compared with the threshold, so that a following vehicle whose random value is greater than the threshold sends the warning information.

10. The vehicle control apparatus according to any one of claims 1 to 8, wherein the decision making module comprises a warning scheme formulation unit, the warning scheme formulation unit selects at least one member vehicle from the plurality of member vehicles based on the global environment information as a sending node that is to send warning information to the another vehicle located outside the platoon, and the warning information is used to provide a situation of the platoon to the another vehicle.

11. The vehicle control apparatus according to claim 10, wherein
the local environment information comprises first communication link status information indicating a status of a direct communication link between a member vehicle and the another vehicle;
the global environment information generation module generates the global environment information by collecting first communication link status information in all local environment information obtained by the local environment information obtaining module; and
the warning scheme formulation unit selects at least one member vehicle from the plurality of member vehicles as the sending node based on the global environment information.

12. The vehicle control apparatus according to claim 11, wherein
the warning scheme formulation unit uses, as a first selected sending node, the pilot vehicle that drives at a foremost location in the platoon, and
performs selection processing of another node, wherein during selection processing of the another node, the another node is selected, from the following vehicle driving after the pilot vehicle in the platoon, based on a condition that the another node can perform direct inter-vehicle communication with a previously selected sending node and that the warning information sent by the another node can cover all other vehicles between the another node and the previously selected sending node.

13. The vehicle control apparatus according to claim 12, wherein
during selection processing of the another node, a following vehicle that is far from the previously selected sending node is preferentially selected.

14. The vehicle control apparatus according to any one of claims 1 to 13, wherein
the local environment information obtained by the local environment information obtaining module comprises second communication link status information indicating a status of a direct communication link between a member vehicle and another member vehicle;
the global environment information generation module generates the global environment information by collecting second communication link status information in all local environment information obtained by the local environment information obtaining module; and
the decision making module comprises a communication path planning unit, the communication path planning unit plans an inter-vehicle communication path based on the second communication link status information in the global environment information, and the inter-vehicle communication path is used by the plurality of member vehicles to perform inter-vehicle communication.

15. The vehicle control apparatus according to claim 14, wherein
the communication path planning unit determines, based on the second communication link status information in the global environment information, whether any two of the plurality of member vehicles can perform direct inter-vehicle communication; and
when determining that two member vehicles cannot perform direct inter-vehicle communication, the communication path planning unit performs relay node selection processing of selecting a relay node from a member vehicle located between the two member vehicles, to plan an inter-vehicle communication path.

16. The vehicle control apparatus according to claim 15, wherein
during relay node selection processing, the communication path planning unit preferentially selects, as the relay node, a member vehicle located in the middle of the two member vehicles.

17. The vehicle control apparatus according to claim 16, wherein
the plurality of member vehicles comprise the pilot vehicle that drives at the foremost location in the platoon and the following vehicle driving after the pilot vehicle in the platoon; and
when there are two following vehicles located in a middle of the two member vehicles, a following vehicle closer to the pilot vehicle is preferentially selected as the relay node.

18. The vehicle control apparatus according to any one of claims 14 to 17, wherein
the vehicle control apparatus is disposed on the pilot vehicle that drives at the foremost location in the platoon;
the decision making module comprises the independent behavior formulation unit; the independent behavior formulation unit formulates, based on the global environment information, the independent behavior of the following vehicle driving after the pilot vehicle in the platoon, and the independent behavior is different from the behavior of driving after the pilot vehicle;
the vehicle control apparatus comprises the driving control information generation unit, and the driving control information generation unit generates, based on the independent behavior formulated by the independent behavior formulation unit, the driving control information used to indicate the following vehicle to execute the independent behavior; and
the communication path planning unit plans, based on the second path link status information in the global environment information, an inter-vehicle communication path to be used by the pilot vehicle to send the driving control information to the following vehicle.

19. A vehicle control method, used to control a platoon comprising a plurality of member vehicles, comprising a local environment information obtaining step, a global environment information generation step, and a decision making step, wherein
the local environment information obtaining step is obtaining local environment information indicating a driving environment of each of the plurality of member vehicles;
the global environment information generation step is generating global environment information indicating a driving environment of the platoon based on the local environment information; and
the decision making step is making a control decision about the platoon based on the global environment information.

20. The vehicle control method according to claim 19, wherein
the vehicle control method is performed by a vehicle control apparatus disposed on a member vehicle i, and the member vehicle i is any one of the plurality of member vehicles;
the local environment information obtaining step comprises a step of obtaining local environment information of a current vehicle and a step of obtaining local environment information of another vehicle;
the step of obtaining local environment information of a current vehicle is obtaining local environment information indicating a driving environment of the member vehicle i; and
the step of obtaining local environment information of another vehicle is obtaining, from another member vehicle different from the member vehicle i by using a communications unit of the member vehicle i, local environment information indicating a driving environment of the another member vehicle.

21. The vehicle control method according to claim 20, wherein the member vehicle i is a pilot vehicle that drives at a foremost location in the platoon.

22. The vehicle control method according to claims 19 to 21, wherein
the local environment information comprises at least location information of a member vehicle and location information of another vehicle located outside the platoon; and
the global environment information generation step is generating the global environment information by collecting location information in all local environment information obtained in the local environment information obtaining step.

23. The vehicle control method according to any one of claims 19 to 22, wherein
the decision making step comprises a pilot behavior formulation step, and the pilot behavior formulation step is formulating, based on the global environment information, a motion behavior of the pilot vehicle that drives at a foremost location in the platoon.

24. The vehicle control method according to any one of claims 19 to 23, wherein
the plurality of member vehicles comprise the pilot vehicle that drives at the foremost location in the platoon and a following vehicle driving after the pilot vehicle in the platoon; and
the decision making step comprises an independent behavior formulation step, the independent behavior formulation step is formulating an independent behavior of a following vehicle based on the global environment information, and the independent behavior is different from a behavior of driving after the pilot vehicle.

25. The vehicle control method according to claim 24, wherein
in the independent behavior formulation step, when the pilot vehicle cannot change a lane, any one of the following independent behaviors is formulated:
① a last following vehicle in the following vehicle changes a lane;
② a following vehicle closest to the pilot vehicle in the following vehicle changes a lane; and
③ all following vehicles simultaneously change a lane.

26. The vehicle control method according to claim 24 or 25, wherein
the vehicle control method is performed by a vehicle control apparatus disposed on the pilot vehicle, and comprises a driving control information generation step, and the driving control information generation step is generating, based on the independent behavior formulated in the independent behavior formulation step, driving control information used to indicate the following vehicle to execute the independent behavior; and
the vehicle control method further comprises a step of sending the driving control information to the following vehicle by using a communications unit of the pilot vehicle.

27. The vehicle control method according to any one of claims 19 to 26, wherein
the decision making step comprises a warning scheme formulation step, the warning scheme formulation step is formulating, in any one of the following manners, a scheme for sending warning information to the another vehicle located outside the platoon, and the warning information is used to provide a situation of the platoon to the another vehicle:
① all of the plurality of member vehicles send the warning information;
② the pilot vehicle that drives at the foremost location in the platoon in the plurality of member vehicles sends the warning information, and a following vehicle whose vehicle sequence number can be exactly divided by N sends the warning information, wherein a number of the pilot vehicle is 0, a plurality of following vehicles that drive after the pilot vehicle in the platoon are sequentially numbered by using natural numbers, and N ≥ 2;
③ the pilot vehicle sends the warning information, and in a plurality of following vehicles, following vehicles whose distances from the pilot vehicle increase by a specified value send the warning information; and
④ the pilot vehicle sends the warning information, each following vehicle generates a random value, a random value range is [0, 1], one threshold is determined, and the random value is compared with the threshold, so that a following vehicle whose random value is greater than the threshold sends the warning information.

28. The vehicle control method according to any one of claims 19 to 27, wherein the decision making step comprises the warning scheme formulation step, the warning scheme formulation step is selecting at least one member vehicle from the plurality of member vehicles based on the global environment information as a sending node that is to send the warning information to the another vehicle located outside the platoon, and the warning information is used to provide the situation of the platoon to the another vehicle.

29. The vehicle control method according to claim 28, wherein
the local environment information comprises first communication link status information indicating a status of a direct communication link between a member vehicle and the another vehicle;
the global environment information generation step is generating the global environment information by collecting first communication link status information in all local environment information obtained in the local environment information obtaining step; and
the warning scheme formulation step is selecting at least one member vehicle from the plurality of member vehicles as the sending node based on the global environment information.

30. The vehicle control method according to claim 29, wherein
the warning scheme formulation step is using, as a first selected sending node, the pilot vehicle that drives at a foremost location in the platoon, and
performing selection processing of another node, wherein during selection processing of the another node, the another node is selected, from the following vehicle driving after the pilot vehicle in the platoon, based on a condition that the another node can perform direct inter-vehicle communication with a previously selected sending node and that the warning information sent by the another node can cover all other vehicles between the another node and the previously selected sending node.

31. The vehicle control method according to claim 30, wherein
during selection processing of the another node, a following vehicle that is far from the previously selected sending node is preferentially selected.

32. The vehicle control method according to any one of claims 19 to 31, wherein
the local environment information obtained in the local environment information obtaining step comprises second communication link status information indicating a status of a direct communication link between a member vehicle and another member vehicle;
the global environment information generation step is generating the global environment information by collecting second communication link status information in all local environment information obtained in the local environment information obtaining step; and
the decision making step comprises a communication path planning step, the communication path planning step is planning an inter-vehicle communication path based on the second communication link status information in the global environment information, and the inter-vehicle communication path is used by the plurality of member vehicles to perform inter-vehicle communication.

33. The vehicle control method according to claim 32, wherein
the communication path planning step is determining, based on the second communication link status information in the global environment information, whether any two of the plurality of member vehicles can perform direct inter-vehicle communication; and
when determining that two member vehicles cannot perform direct inter-vehicle communication, performing relay node selection processing of selecting a relay node from a member vehicle located between the two member vehicles, to plan an inter-vehicle communication path.

34. The vehicle control method according to claim 33, wherein
during relay node selection processing, a member vehicle located in the middle of the two member vehicles is preferentially selected as the relay node.

35. The vehicle control method according to claim 34, wherein
the plurality of member vehicles comprise the pilot vehicle that drives at the foremost location in the platoon and the following vehicle driving after the pilot vehicle in the platoon; and
when there are two following vehicles located in a middle of the two member vehicles, a following vehicle closer to the pilot vehicle is preferentially selected as the relay node.

36. The vehicle control method according to any one of claims 32 to 35, wherein
the vehicle control method is performed by the vehicle control apparatus disposed on the pilot vehicle that drives at the foremost location in the platoon;
the decision making step comprises the independent behavior formulation step, the independent behavior formulation step is formulating, based on the global environment information, the independent behavior of the following vehicle driving after the pilot vehicle in the platoon, and the independent behavior is different from the behavior of driving after the pilot vehicle;
the vehicle control method comprises the driving control information generation step, and the driving control information generation step is generating, based on the independent behavior formulated in the independent behavior formulation step, the driving control information used to indicate the following vehicle to execute the independent behavior; and
the communication path planning step is planning, based on the second path link status information in the global environment information, an inter-vehicle communication path to be used by the pilot vehicle to send the driving control information to the following vehicle.

37. A computer-readable storage medium, storing a program that enables a computer to perform the vehicle control method according to any one of claims 19 to 36.

38. A computing device, comprising a processor and a memory, wherein the memory stores a program, and the processor runs the program to perform the vehicle control method according to any one of claims 19 to 36.

39. A vehicle, comprising the vehicle control apparatus according to any one of claims 1 to 18.

40. A platooning driving system, comprising a platoon comprising a plurality of member vehicles, wherein
the platooning driving system comprises a main control apparatus, and the main control apparatus comprises a local environment information obtaining module, a global environment information generation module, and a decision making module;
the local environment information obtaining module is configured to obtain local environment information indicating a driving environment of each of the plurality of member vehicles;
the global environment information generation module is configured to generate, based on the local environment information, global environment information indicating a driving environment of the platoon; and
the decision making module is configured to make a control decision about the platoon based on the global environment information.

41. The platooning driving system according to claim 40, wherein
the plurality of member vehicles comprise a main control vehicle provided with the main control apparatus and another member vehicle;
the main control apparatus generates first local environment information indicating a driving environment of the main control vehicle;
a vehicle control apparatus of the another member vehicle generates second local environment information indicating a driving environment of the another member vehicle, and sends the generated second local environment information to the main control apparatus; and
the global environment information generation module of the main control apparatus generates the global environment information based on the first local environment information and the second local environment information.

42. The platooning driving system according to claim 41, wherein the main control vehicle is a pilot vehicle that drives at a foremost location in the platoon, and the another member vehicle is a following vehicle driving after the pilot vehicle.

43. The platooning driving system according to claims 40 to 42, wherein
the local environment information comprises at least location information of a member vehicle and location information of another vehicle located outside the platoon; and
the global environment information generation module generates the global environment information by collecting location information in all local environment information obtained by the local environment information obtaining module.

44. The platooning driving system according to any one of claims 40 to 43, wherein
the decision making module comprises a pilot behavior formulation unit, and the pilot behavior formulation unit formulates, based on the global environment information, a motion behavior of the pilot vehicle that drives at the foremost location in the platoon.

45. The platooning driving system according to any one of claims 40 to 44, wherein
the plurality of member vehicles comprise the pilot vehicle that drives at the foremost location in the platoon and the following vehicle driving after the pilot vehicle in the platoon; and
the decision making module comprises an independent behavior formulation unit, the independent behavior formulation unit formulates an independent behavior of the following vehicle based on the global environment information, and the independent behavior is different from a behavior of driving after the pilot vehicle.

46. The platooning driving system according to claim 45, wherein
when the pilot vehicle cannot change a lane, the independent behavior formulation unit formulates any one of the following independent behaviors:
① a last following vehicle in the following vehicle changes a lane;
② a following vehicle closest to the pilot vehicle in the following vehicle changes a lane; and
③ all following vehicles simultaneously change a lane.

47. The platooning driving system according to claim 45 or 46, wherein
the main control apparatus is disposed on the pilot vehicle, and comprises a driving control information generation module, and the driving control information generation module generates, based on the independent behavior formulated by the independent behavior formulation unit, driving control information used to indicate the following vehicle to execute the independent behavior; and
the main control apparatus sends the driving control information to the following vehicle by using a communications unit of the pilot vehicle.

48. The platooning driving system according to any one of claims 40 to 47, wherein
the decision making module comprises a warning scheme formulation unit, the warning scheme formulation unit formulates, in any one of the following manners, a scheme for sending warning information to the another vehicle located outside the platoon, and the warning information is used to provide a situation of the platoon to the another vehicle:
① all of the plurality of member vehicles send the warning information;
② the pilot vehicle that drives at the foremost location in the platoon in the plurality of member vehicles sends the warning information, and a following vehicle whose vehicle sequence number can be exactly divided by N sends the warning information, wherein a number of the pilot vehicle is 0, a plurality of following vehicles that drive after the pilot vehicle in the platoon are sequentially numbered by using natural numbers, and N ≥ 2;
③ the pilot vehicle sends the warning information, and in a plurality of following vehicles, following vehicles whose distances from the pilot vehicle increase by a specified value send the warning information; and
④ the pilot vehicle sends the warning information, each following vehicle generates a random value, a random value range is [0, 1], one threshold is determined, and the random value is compared with the threshold, so that a following vehicle whose random value is greater than the threshold sends the warning information.

49. The platooning driving system according to any one of claims 40 to 47, wherein the decision making module comprises a warning scheme formulation unit, the warning scheme formulation unit selects at least one member vehicle from the plurality of member vehicles based on the global environment information as a sending node that is to send warning information to the another vehicle located outside the platoon, and the warning information is used to provide a situation of the platoon to the another vehicle.

50. The platooning driving system according to claim 49, wherein
the local environment information comprises first communication link status information indicating a status of a direct communication link between a member vehicle and the another vehicle;
the global environment information generation module generates the global environment information by collecting first communication link status information in all local environment information obtained by the local environment information obtaining module; and
the warning scheme formulation unit selects at least one member vehicle from the plurality of member vehicles as the sending node based on the global environment information.

51. The platooning driving system according to claim 50, wherein
the warning scheme formulation unit uses, as a first selected sending node, the pilot vehicle that drives at a foremost location in the platoon, and
performs selection processing of another node, wherein during selection processing of the another node, the another node is selected, from the following vehicle driving after the pilot vehicle in the platoon, based on a condition that the another node can perform direct inter-vehicle communication with a previously selected sending node and that the warning information sent by the another node can cover all other vehicles between the another node and the previously selected sending node.

52. The platooning driving system according to claim 51, wherein
during selection processing of the another node, a following vehicle that is far from the previously selected sending node is preferentially selected.

53. The platooning driving system according to any one of claims 40 to 52, wherein
the local environment information obtained by the local environment information obtaining module comprises second communication link status information indicating a status of a direct communication link between a member vehicle and another member vehicle;
the global environment information generation module generates the global environment information by collecting second communication link status information in all local environment information obtained by the local environment information obtaining module; and
the decision making module comprises a communication path planning unit, the communication path planning unit plans an inter-vehicle communication path based on the second communication link status information in the global environment information, and the inter-vehicle communication path is used by the plurality of member vehicles to perform inter-vehicle communication.

54. The platooning driving system according to claim 53, wherein
the communication path planning unit determines, based on the second communication link status information in the global environment information, whether any two of the plurality of member vehicles can perform direct inter-vehicle communication; and
when determining that two member vehicles cannot perform direct inter-vehicle communication, the communication path planning unit performs relay node selection processing of selecting a relay node from a member vehicle located between the two member vehicles, to plan an inter-vehicle communication path.

55. The platooning driving system according to claim 54, wherein
during relay node selection processing, the communication path planning unit preferentially selects, as the relay node, a member vehicle located in the middle of the two member vehicles.

56. The platooning driving system according to claim 55, wherein
the plurality of member vehicles comprise the pilot vehicle that drives at the foremost location in the platoon and the following vehicle driving after the pilot vehicle in the platoon; and
when there are two following vehicles located in a middle of the two member vehicles, a following vehicle closer to the pilot vehicle is preferentially selected as the relay node.

57. The platooning driving system according to any one of claims 53 to 56, wherein
the main control apparatus is disposed on the pilot vehicle that drives at the foremost location in the platoon;
the decision making module comprises the independent behavior formulation unit; the independent behavior formulation unit formulates, based on the global environment information, the independent behavior of the following vehicle driving after the pilot vehicle in the platoon, and the independent behavior is different from the behavior of driving after the pilot vehicle;
the main control apparatus comprises the driving control information generation unit, and the driving control information generation unit generates, based on the independent behavior formulated by the independent behavior formulation unit, the driving control information used to indicate the following vehicle to execute the independent behavior; and
the communication path planning unit plans, based on the second path link status information in the global environment information, an inter-vehicle communication path to be used by the pilot vehicle to send the driving control information to the following vehicle.
